# EUROPÄISCHE PATENTSCHRIFT

(11) **EP 1 847 158 B1**
(45) Veröffentlichungstag und Bekanntmachung des Hinweises auf die Patenterteilung: **28.01.2009**
(21) Anmeldenummer: 06706744.7
(22) Anmeldetag: 08.02.2006
(51) Int. Cl.: H05B 6/10, B23P 11/02, B23B 31/02

(54) **INDUKTIONSSPULENEINHEIT**
INDUCTION COIL UNIT
UNITE DE BOBINE DE SELF

(30) Priorität: 09.02.2005 DE 102005005892
(43) Veröffentlichungstag der Anmeldung: 24.10.2007
(73) Patentinhaber: Haimer GmbH, 86568 Hollenbach-Igenhausen (DE)
(72) Erfinder: HAIMER, Franz, 86568 Hollenbach (DE); HODEK, Josef, 86568 Hollenbach-Igenhausen (DE); PODHRAZKY, Antonin, 86568 Hollenbach-Igenhausen (DE)
(74) Vertreter: Liska, Horst
(86) Internationale Anmeldenummer: PCT/EP2006/001104
(87) Internationale Veröffentlichungsnummer: WO 2006/084678

(56) Entgegenhaltungen:
- WO-A-01/89758
- FR-A- 1 524 221
- US-A- 4 761 527
- US-A1- 2003 168 445
- US-A1- 2004 160 020

## Beschreibung

Die Erfindung betrifft eine Induktionsspuleneinheit zum Erwärmen eines relativ zu einer Achse rotationssymmetrischen Bauteils aus elektrisch leitendem Material, insbesondere eines Hülsenteils, welches in einer zu der Achse zentrischen Aufnahmeöffnung einen langgestreckten Gegenstand im Presssitz hält, vorzugsweise zum Erwärmen des Hülsenteils eines Werkzeughalters, der in seiner zur Drehachse zentrischen Aufnahmeöffnung einen Schaft eines Rotationswerkzeugs, insbesondere eines Bohr- oder Fräswerkzeugs im Presssitz hält.

Es ist allgemein bekannt, Bauteile, insbesondere relativ zu einer Achse rotationssymmetrische Bauteile, mittels induktiv erzeugter Wirbelströme, beispielsweise zum Anlassen oder Tempern oder auch zum Oberflächenhärten zu erwärmen. Gleichfalls ist es bekannt, den Schrumpfverband eines eine Welle oder einen Schaft im Presssitz umschließenden Hülsenteils, beispielsweise eines Lagerrings oder dergleichen induktiv zu erwärmen und damit soweit aufzuweiten, dass der Hülsenteil von der Welle gelöst werden kann.

Es ist auch bekannt, den zylindrischen Schaft eines rotierend anzutreibenden Werkzeugs, beispielsweise eines Bohrers oder Fräsers, in eine im Wesentlichen zylindrische Aufnahmeöffnung eines Werkzeughalters einzuschrumpfen. Der Werkzeughalter kann integraler Bestandteil einer Maschinenspindel sein oder aber seinerseits einen Kupplungsabschnitt, beispielsweise in Form eines konischen Endabschnitts haben, mit dem er an der Arbeitsspindel befestigt wird. Der Werkzeugschaft hat bezogen auf den Innendurchmesser der Aufnahmeöffnung Übermaß. Zum Einsetzen oder Entnehmen des Werkzeugschafts wird ein die Aufnahmeöffnung enthaltender Hülsenteil des Werkzeughalters erwärmt, bis der Innendurchmesser der Aufnahmeöffnung soweit gedehnt ist, dass der Werkzeugschaft eingesetzt oder entnommen werden kann. Nach dem Erkalten hält der Hülsenteil den Werkzeugschaft im Presssitz.

Aus WO 02/24965 A1 ist eine Induktionsspuleneinheit zum Erwärmen des Hülsenteils eines das Werkzeug in einer zur Drehachse des Werkzeugs zentrischen Aufnahmeöffnung im Presssitz haltenden Werkzeughalters bekannt, bei welchem auf radial gegenüberliegenden Seiten des Hülsenteils zwei je eine Spule tragende Spulenkerne angeordnet sind, deren Polflächen im Abstand voneinander verlaufen, so dass der Hülsenteil des Werkzeughalters in den Luftspalt zwischen den einander zugewandten Polflächen eingeführt werden kann. Die Breite des Luftspalts kann durch Verschieben der Kerne verändert und an Hülsenteile mit unterschiedlichem Durchmesser angepasst werden. Bei der bekannten Induktionsspuleneinheit sind die den Kernen zugeordneten Spulen fest mit diesen verbunden, und die bekannte Induktionsspuleneinheit induziert in dem Hülsenteil in dessen Umfangsrichtung verlaufende Ströme.

Eine weitere Induktionsspuleneinheit zur Erwärmung des Hülsenabschnitts eines Werkzeughalters ist aus US 2003/0168445 A1 bekannt. Bei dieser Induktionsspuleneinheit sind die von den Spulen umschlossenen, in Umfangsrichtung des Hülsenteils verteilten Polstücke an zwei klappbar miteinander verbundenen Segmenten eines ringförmigen Jochs angeordnet, so dass der Hülsenteil bei geöffnetem Joch radial in den Aufnahmeraum der Induktionsspuleneinheit eingeführt werden kann. Auf diese Weise können auch Werkzeuge geschrumpft werden, deren Kopfdurchmesser größer als der Abstand zwischen den Polflächen der Kerne ist.

Schließlich sind aus der deutschen Auslegeschrift 1 094 893 und aus dem deutschen Patent 922 700 Induktionsspuleneinheiten bekannt, deren Kerne relativ zu den stationär angeordneten Spulen radial verschiebbar sind. Die Induktionsspuleneinheiten erlauben das Lösen von auf eine Welle aufgeschrumpfter Lagerringe eines Wälzlagers, wobei auch hier der von den Spulen erzeugte Magnetfluss in Umfangsrichtung verlaufende Induktionsströme in dem zu erwärmenden Hülsenteil erzeugt.

Es hat sich gezeigt, dass mit herkömmlichen Induktionsspuleneinheiten der vorstehend erläuterten Art ein rotationssymmetrisches Bauteil in axialer Richtung oder/und im Umfangsrichtung vielfach nur unzureichend gleichmäßig erwärmt werden kann. Dies wirkt sich insbesondere dann nachteilig aus, wenn ein Hülsenteil eines Schrumpfverbands und speziell der Hülsenteil eines Werkzeughalters für das Ein- und Ausschrumpfen von Rotationswerkzeugen in den Werkzeughalter erwärmt werden soll. Die unzureichend gleichmäßige Erwärmung führt zu einer ungleichmäßigen Wärmedehnung des Hülsenteils und kann im Einzelfall zu lokalen Überhitzungsschäden an dem Hülsenteil führen.

Unter einem ersten Aspekt ist es Aufgabe der Erfindung, eine Induktionsspuleneinheit zum Erwärmen eines rotationssymmetrischen Bauteils, insbesondere eines Hülsenteils, beispielsweise eines Werkzeughalters zu schaffen, die es ermöglicht, das Hülsenteil gleichmäßiger als bisher zu erwärmen.

Die Erfindung geht von einer Induktionsspuleneinheit zum Erwärmen eines relativ zu einer Achse rotationssymmetrischen Bauteils aus elektrisch leitendem Material, insbesondere eines Hülsenteils, welches in einer zu der Achse zentrischen Aufnahmeöffnung einen langgestreckten Gegenstand im Presssitz hält, vorzugsweise zum Erwärmen des Hülsenteils eines Werkzeughalters, der in seiner zur Drehachse zentrischen Aufnahmeöffnung einen Schaft eines Rotationswerkzeugs, insbesondere eines Bohr- oder Fräswerkzeugs im Presssitz hält, aus, wobei diese Induktionsspuleneinheit umfasst:
- einen zur Achse zentrischen Aufnahmeraum für das Bauteil,
- eine insbesondere geradzahlige Anzahl in gleichen Winkelabständen um die Achse herum verteilt angeordneter Polstücke aus einem Material mit weichmagnetischen, den Magnetfluss leitenden Eigenschaften,
- mehrere mit Wechselstrom speisbare Spulen zur Erzeugung magnetischer Flüsse in den Polstücken, derart, dass der magnetische Fluss in Umfangsrichtung benachbarter Polstücke entgegengesetzte Richtung hat.

Die vorstehend erwähnte Aufgabe wird erfindungsgemäß dadurch gelöst, dass die Polstücke der Achse radial zugewandte Endflächen haben, die auf dem größeren Teil ihrer axialen Höhe in einem ersten Bereich längs der Erzeugenden einer äußeren Umfangsfläche des Bauteils in linienförmigen oder flächenförmigen Anlagekontakt oder nahezu einen solchen Anlagekontakt mit der äußeren Umfangsfläche des Bauteils bringbar sind, und dass sich zumindest auf axial einer Seite des ersten Bereichs wenigstens einer der Endflächen, insbesondere jeder der Endflächen an den ersten Bereich ein zweiter Bereich anschließt, in welchem die Endfläche mit einem größeren radialen Abstand von der Erzeugenden der äußeren Umfangsfläche als in dem ersten Bereich verläuft.

Bei der Erzeugenden der äußeren Umfangsfläche handelt es sich um die Konturbegrenzungslinie im mathematischen Sinn. Wenn hier und im Folgenden von radialer Richtung, axialer Richtung oder Umfangsrichtung die Rede ist, so beziehen sich die Richtungsangaben stets auf die genannte Drehachse.

Es hat sich gezeigt, dass es an den axialen Endbereichen der Polstücke zu Feldkonzentrationen kommt, die ihrerseits zu ungleichförmigen Erwärmungen des Bauteils nahe der Endbereiche des Polstücks führen. Die Vergrößerung des radialen Abstands der Endfläche des Polstücks von der Umfangsfläche des Bauteils im Bereich dieser axialen Endbereiche sorgt für eine gleichmäßigere Erwärmung. Da die Polstücke sehr nahe an die äußere Umfangsfläche des Bauteils heranreichen und vorzugsweise an dieser Umfangsfläche anliegen, werden magnetische Streufelder im Bereich des Bauteils weitgehend vermieden, was insbesondere beim Lösen eines Schrumpfverbands, beispielsweise eines Werkzeughalters, von Vorteil ist.

In dem zweiten Bereich kann der Abstand der Endfläche von der Erzeugenden der Umfangsfläche des Bauteils sprunghaft vergrößert sein. Im Sinne einer gleichmäßigeren Erwärmung ist es jedoch günstig, wenn die Endfläche im zweiten Bereich gegen die Erzeugende der Umfangsfläche geneigt verläuft, wobei sich der radiale Abstand von der Erzeugenden mit wachsendem axialem Abstand vom ersten Bereich vergrößert.

Die Erzeugende kann eine konusförmige Umfangsfläche des Bauteils definieren, wie dies zum Beispiel bei herkömmlichen Werkzeughaltern mit konischen, zur Werkzeugaustrittsseite hin sich verjüngenden Hülsenteilen üblich ist. Da auf Grund der Konizität des Bauteils sein magnetischer Widerstand axial variiert, kann sich das Bauteil auf Grund seiner Form in axialer Richtung unterschiedlich stark erwärmen. Dem kann entgegengewirkt werden, wenn sich der zweite Bereich der Endflächen auf der im Durchmesser kleineren Seite des ersten Bereichs anschließt, bei einem Werkzeughalters also auf der zur Werkzeugaustrittsseite hin gelegenen Seite.

Der Flusskonzentration in dem Bauteil nahe den axialen Enden der Endflächen der Polstücke kann ferner entgegengewirkt werden, wenn die der Achse radial zugewandte Endfläche jedes Polstücks an einem ihrer axialen Enden oder an beiden axialen Enden eine von der Achse weg verlaufende, insbesondere gerundete Randfläche hat. Der auf Grund der zum Beispiel gerundeten Randfläche sich vergrößernde radiale Abstand zur äußeren Umfangsfläche des Bauteils verringert die Magnetflussdichte in diesem Bereich und beugt einer lokalen Überhitzung des Bauteils, beispielsweise des Hülsenteils eines Werkzeughalters vor.

Unter dem vorstehend erläuterten Aspekt der Erfindung kann für eine in axialer Richtung gleichmäßigere Erwärmung des Bauteils gesorgt werden. Es hat sich jedoch gezeigt, dass herkömmliche lnduktionsspuleneinheiten vielfach auch eine in Umfangsrichtung ungleichmäßige Erwärmung des Bauteils bewirken. Um für eine in Umfangsrichtung gleichmäßigere Erwärmung zu sorgen, ist unter einem zweiten Aspekt der Erfindung vorgesehen, dass die Polstücke die Form flacher Scheiben haben, deren Flachseiten im Wesentlichen parallel zur Achse verlaufen und deren der Achse radial zugewandte Endflächen auf dem größten Teil ihrer axialen Höhe in linienförmigen oder flächenförmigen Anlagekontakt oder nahezu in einem solchen Anlagekontakt mit der äußeren Umfangsfläche des Bauteils bringbar sind.

In dieser Ausgestaltung, die auch von dem ersten Aspekt unabhängige erfinderische Bedeutung hat, wird der Anlagekontakt der Polstücke auf einen in Umfangsrichtung bezogen auf die gesamte Umfangslänge schmalen Bereich begrenzt, um sicherzustellen, dass ein hinreichend großer Anteil des Magnetflusses in Umfangsrichtung in dem Bauteil verläuft, was sich für eine gleichmäßige Erwärmung als vorteilhaft erwiesen hat. Dieses Ziel lässt sich insbesondere erreichen, wenn die der Achse zugewandte Endfläche jedes Polstücks zumindest in ihrem Anlagekontaktbereich zur Achse hin verjüngt ist. Gesehen in einer achsnormalen Ebene sorgt der auf diese Weise radial sich vergrößernde Abstand der Endfläche von der Umfangsfläche des Bauteils dafür, dass der Magnetfluss im Wesentlichen im Bereich der schmalen Anlagekontaktfläche in das Bauteil übertritt. Die Verjüngung der Endflächen vergrößert darüber hinaus den Umfangsabstand benachbarter Polstücke, was Streuflüsse zwischen den Polstücken verringert, insbesondere wenn die Polstücke für Hülsenteile mit kleinem Durchmesser einander radial angenähert werden. Die Endflächen können in dem Anlagekontaktbereich konvex verrundet sein, beispielsweise teilkreiszylindrisch verrundet sein; sie können sich aber in dem Anlagekontaktbereich auch keilförmig verjüngen.

Zur Minderung des Streuflusses und damit verbundener magnetischer Verluste ist in einer bevorzugten Ausgestaltung vorgesehen, dass die Polstücke relativ zu einem den Aufnahmeraum konzentrisch zur Achse umschließenden Jochring aus weichmagnetischem, Magnetfluss leitenden Material radial verschiebbar sind und die Spulen radial innerhalb des Jochrings angeordnet sind.

Wenngleich mehreren Polstücken jeweils eine gemeinsame Spule zugeordnet sein kann, so ist jedoch bevorzugt vorgesehen, dass jedem Polstück eine gesonderte Spule zugeordnet ist, die ihr Polstück umschließt. Diese Ausgestaltung erleichtert die magnetische Symmetrierung des in dem Bauteil induzierten Magnetflusses.

Der Herstellungsaufwand und die Herstellungskosten lassen sich verringern, wenn der Jochring aus Segmenten zusammengesetzt ist. Dieser Vorteil ergibt sich insbesondere dann, wenn jedes Segment zusammen mit einer der Spulen und einem der Polstücke zu einer Baueinheit vereinigt ist. Es versteht sich, dass auch je eines der Segmente mit je einem der Polstücke zu einer T-förmigen Baueinheit vereinigt sein kann, die insgesamt radial verschiebbar ist.

Die Polstücke können hierbei Öffnungen des Jochrings bzw. der Segmente verschiebbar durchsetzen und zwar bevorzugt so, dass der Jochring die ihm zugewandten, axialen Stirnflächen der Spulen allseitig überdeckt. Hierdurch lässt sich magnetischer Streufluss besonders gut verringern. Auch kann hierzu jede Spule in einer in den Jochring radial eingesenkten Tasche zumindest über einen Teil ihrer axialen Spulenhöhe eingreifen.

Aus Sicherheitsgründen sind der Jochring und die Spulen zweckmäßigerweise in einem ringförmigen Gehäuse aus elektrisch isolierendem Material fixiert. Bei dem Gehäuse kann es sich um ein vorgefertigtes Hülsenteil handeln, in das der Jochring und die Spulen eingesetzt werden. Bevorzugt umfasst das Gehäuse jedoch einen an dem Jochring und den Spulen angegossenen, zumindest die Spulen umschließenden Ring aus Kunststoff-Vergussmasse, der für die Positionierung und Isolation der Spulen und gegebenenfalls des Jochrings sorgt. Eine solche Konstruktion ist mechanisch stabil und kann kostengünstig hergestellt werden, selbst wenn für die Befestigung der Induktionsspuleneinheit an einer schrumpfgerätefesten Führung oder dergleichen zusätzliche Halterungen oder Gehäuseteile angebracht werden müssen. Diese Gehäuseteile können gegebenenfalls auch als "verlorene Gießform" für den Vergussmasse-Ring dienen.

Der für die Aufnahme des Bauteils, z.B. des Hülsenteils des Werkzeughalters bestimmte Aufnahmeraum der Induktionsspuleneinheit kann einen verhältnismäßig großen Durchmesser haben, da die Polstücke zur Betriebsanpassung an den tatsächlichen Durchmesser des Bauteils radial verschiebbar sind. Zweckmäßigerweise trägt deshalb der Jochring auf einer seiner Stirnseiten oder beiden Stirnseiten z.B. auf seiner der Werkzeugaustrittseite des Hülsenteils axial benachbarten Stirnseite eine mit einer Durchtrittsöffnung für das Werkzeug versehene Ringscheibe aus weichmagnetischem, den Magnetfluss leitenden Material in axialem Abstand von den Polstücken. Die Ringscheibe schirmt die Umgebung der Induktionsspuleneinheit magnetisch ab.

Die Induktionsspuleneinheit umfasst bevorzugt vier oder mehr radial verschiebbare Polstücke. Um die Bedienung zu vereinfachen, sollten deshalb sämtliche Polstücke gemeinsam zwangsbewegt werden können. Andererseits sollte das die Polstücke und Spulen verschiebbar führende Gehäuse radial teilbar sein, um in an sich bekannter Weise auch Werkzeuge in den Werkzeughalter einschrumpfen zu können, wenn der Kopfdurchmesser der Werkzeuge größer als der Durchmesser des Aufnahmeraums ist, so dass das Werkzeug nicht axial in den Aufnahmeraum eingebracht werden kann.

In einer bevorzugten Ausgestaltung, die unter einem dritten Aspekt der Erfindung auch bei anderen als den vorstehend erläuterten Induktionsspuleneinheiten eingesetzt werden kann, also selbständige erfinderische Bedeutung besitzt, ist vorgesehen, dass die Polstücke relativ zu einem den Aufnahmeraum ringförmig umschließenden Gehäuse radial verschiebbar geführt sind und mit einem koaxial zur Achse drehbeweglich an einer den Aufnahmeraum umschließenden Ringführung des Gehäuses geführten Stellring gekuppelt sind, derart, dass bei einer Drehbewegung des Stellrings die Polstücke gemeinsam eine radiale Verschiebebewegung ausführen. Das Gehäuse einschließlich des daran koaxial drehbar geführten Stellrings ist hierbei in zwei zum radialen Öffnen des Aufnahmeraums radial zur Achse relativ zueinander bewegbare Baugruppen, insbesondere hälftig, unterteilt, wobei eine Kupplungsvorrichtung die Baugruppen betriebsmäßig lösbar verbindet. Solange die beiden Gehäusehälften zu einem geschlossenen Ring verbunden sind, können auch die Stellringhälften entsprechend einem geschlossenen Ring gedreht werden, da jede der beiden Stellringhälften für sich drehbar an einer der Gehäusehälften geführt ist.

Zum radialen Öffnen des Aufnahmeraums kann eine der beiden Baugruppen insgesamt von der anderen Baugruppe abnehmbar sein oder längs einer Linearführung verschiebbar sein. Konstruktiv einfach und dennoch stabil ist eine Ausführungsform, bei der die beiden Baugruppen mittels eines Scharniers klappbar miteinander verbunden sind. Die zur Verbindung der beiden Baugruppen vorgesehene Kupplungsvorrichtung ist zweckmäßigerweise so ausgebildet, dass sie wechselweise entweder die beiden Gehäusesegmente miteinander verbindet oder das an dem Gehäusesegment drehbeweglich geführte Stellringsegment an dem Gehäusesegment drehfest fixiert.

Abhängig vom Bauteil, z.B. dem Bautyp des Werkzeughalters kann das konusförmige Bauteil unterschiedliche Konuswinkel haben. Dementsprechend sollte der Neigungswinkel der Endfläche der Polstücke an unterschiedliche Konuswinkel anpassbar sein. In einer ersten Variante ist vorgesehen, dass zur Anpassung die Polstücke auswechselbar an der Induktionsspuleneinheit gehalten sind, so dass jeweils dem Konuswinkel angepasste Polstücke eingesetzt werden können. Bei Ausführungsformen mit einem Stellring der vorstehend erläuterten Art, der sämtliche Polstücke gemeinsam bewegt, kann vorgesehen sein, dass der Stellring mit Kupplungsorganen der Polstücke zusammenwirkende Spiralführungen aufweist, die die Drehbewegung des Stellrings in eine gemeinsame radiale Schiebebewegung der Polstücke umsetzen, wobei die Spiralführungen am Umfang des Stellrings, insbesondere dessen Außenumfang, münden und die Polstücke radial entnehmbar in dem Gehäuse geführt sind. Es versteht sich, dass die Spiralführungen auch am Innenumfang des Stellrings münden können, wobei die Polstücke dann nach innen entnommen werden.

Alternativ kann aber auch vorgesehen sein, dass die in Anlagekontakt mit der äußeren Umfangsfläche des Bauteils bringbaren Endflächen der Polstücke eine betriebsmäßig änderbare Kontur haben, so dass für die Anpassung an unterschiedliche Konturen des Bauteils die Polstücke nicht als solche ausgewechselt werden müssen. Auch diese Idee ist unter einem vierten Aspekt der Erfindung bei anderen als den vorstehend erläuterten Induktionsspuleneinheiten einsetzbar und hat deshalb selbständige erfinderische Bedeutung.

In einer ersten Ausgestaltung kann die Endfläche an einem um eine tangential zur Achse verlaufende Schwenkachse schwenkbar an dem Polstück gehaltenen Endstück vorgesehen sein, welches sich gelenkig an die Neigung der äußeren Umfangsfläche des Bauteils anpasst. Alternativ kann die Endfläche aber auch an einem betriebsmäßig auswechselbar an dem Polstück gehaltenen Endstück vorgesehen sein. Hierbei wird nicht das gesamte Polstück ausgewechselt, sondern lediglich das der Achse benachbarte Endstück.

In einer anderen selbsttätig sich anpassenden Variante kann das Polstück mehrere relativ zueinander radial zur Achse verschiebbare Endstücke umfassen, deren der Achse radial zugewandte Stirnflächen gemeinsam die Endfläche des Polstücks bilden.

Bei den vorgenannt erläuterten Ausführungsformen der Induktionsspuleneinheit sind die Polstücke radial beweglich geführt. In einer Alternative mit selbständiger erfinderischer Bedeutung ist unter einem fünften Aspekt der Erfindung vorgesehen, dass die Polstücke radial beweglich aber auch radial feststehend angeordnet sein können und im Wesentlichen ebene Wandplatten eines den Aufnahmeraum umschließenden pyramidenstumpfförmigen Jochrings bilden, wobei die Wandplatten mit ihren die Endfläche der Polstücke bildenden inneren Wandflächen in zumindest angenähert linienförmigen Anlagekontakt oder nahezu in einen solchen Anlagekontakt mit der äußeren, konusförmigen Umfangsfläche des Bauteils bringbar sind. In dieser Ausführungsform bildet mit anderen Worten der Jochring zugleich die Polstücke. Auch hier lässt sich die Induktionsspuleneinheit an Bauteile mit unterschiedlichem Durchmesser oder/und unterschiedlichem Konuswinkel anpassen, wenn die Wandplatten zur Anpassung an den Durchmesser des Bauteils tangential oder/und radial zur Achse verschiebbar geführt sind oder/und zur Anpassung an den Konuswinkel des Bauteils relativ zur Achse neigbar geführt sind.

Es versteht sich, dass die zur Vergleichmäßigung der Erwärmung vorangegangen erläuterten Konturgestaltungen der Endflächen der Polstücke bei sämtlichen vorangegangen erläuterten Varianten der Polstücke einsetzbar sind.

Im Betrieb werden die Spulen der Induktionsspuleneinheit mit Wechselstrom, insbesondere hochfrequentem Wechselstrom bei Frequenzen von einigen kHz oder mehr erregt. Um eine Überhitzung des Bauteils zu vermeiden, wird die Dauer und/oder die Stromstärke des von einem Generator gelieferten Wechselstroms gesteuert bzw. geregelt. Es ist auch bekannt mittels eines berührungsfreien Temperatursensors, beispielsweise eines Infrarotsensors, die Oberflächentemperatur des Bauteils zu messen und den Generator abhängig von der gemessenen Temperatur zu steuern. Derartige Temperaturmessmethoden haben sich aber in der Vergangenheit als fehleranfällig herausgestellt. Unter einem sechsten Aspekt der Erfindung ist es deshalb Aufgabe der Erfindung einen Weg zu zeigen, wie eine Überhitzung des Bauteils sicher vermieden werden kann. Diese Aufgabe wird bei einer Induktionsspuleneinheit der vorstehend erläuterten Art oder einer sonstigen induktionsspuleneinheit dadurch gelöst, dass in der in Anlagekontakt oder nahezu in Anlagekontakt mit der äußeren Umfangsfläche des Bauteils bringbaren Endfläche zumindest eines der Polstücke ein in direktem Anlagekontakt mit der Umfangsfläche bringbarer Temperatursensor angeordnet ist.

Die Spulen sind an einen den Wechselstrom liefernden Generator angeschlossen. Der Generator kann auf den Temperatursensor ansprechen und dementsprechend den Wechselstrom abschalten, wenn der Temperatursensor eine vorbestimmte Temperatur erfasst oder überschreitet.

Alternativ oder auch zusätzlich kann eine auf den Temperatursensor ansprechende Signalisier- bzw. Warnanordnung vorgesehen sein, die ein optisches oder/und akustisches Warnsignal erzeugt, wenn der Temperatursensor eine Temperatur gleich oder höher als die vorbestimmte Temperatur erfasst. Auch kann eine auf den Temperatursensor ansprechende Anzeigeanordnung vorgesehen sein, die den Wert der von dem Temperatursensor erfassten Temperatur zum Beispiel auf einem Display ablesbar anzeigt.

Da der Temperatursensor in unmittelbarem Anlagekontakt die tatsächliche Temperatur des Bauteils misst, lässt sich die Temperatur exakt und störungsfrei bestimmen und zur Steuerung des Generators ausnutzen.

Um Bauteile reproduzierbar erwärmen zu können, ist es üblich, das Gehäuse der Induktionsspuleneinheit mit Hilfe eines Abstandhalters in vorbestimmtem axialem Abstand zu dem Bauteil im Betrieb festzulegen. Unter einem siebten Aspekt der Erfindung mit selbständiger Bedeutung ist die Induktionsspuleneinheit für die Erwärmung eines den Schaft eines Rotationswerkzeugs in der Aufnahmeöffnung zentrisch zur Drehachse im Presssitz aufnehmenden Hülsenteils eines Werkzeughalters bestimmt. Die Polstücke sind hierbei an einem den Aufnahmeraum ringförmig umschließenden Gehäuse verschiebbar geführt und an dem Gehäuse ist seinerseits ein in axialer oder/und radialer Richtung beweglich justierbarer Abstandhalter geführt. Der justierbare Abstandhalter erlaubt es, die Induktionsspuleneinheit reproduzierbar bei Werkzeughaltern unterschiedlichen Bautyps einzusetzen. Der justierbare Abstandhalter erleichtert den Betrieb insbesondere dann, wenn die Polstücke und die Abstandhalter für eine gemeinsame Bewegung miteinander zwangsgekuppelt sind, beispielsweise über ein Hebel- oder Zahnrad- oder Schrägflächengetriebe.

Üblicherweise muss der den Wechselstrom liefernde Generator auf den Typ oder die Baugröße des Werkzeughalters eingestellt werden. Unter einem achten Aspekt der Erfindung mit selbständiger Bedeutung wird selbständiges Einstellen des Generators an das zu erwärmende Bauteil ermöglicht. Hierzu können an dem Gehäuse die Polstücke oder/und ein in axialer oder/und radialer Richtung bewegliches Anschlagelement z.B. der vorstehend erläuterte Abstandhalter geführt sein, welcher im Betrieb zur Anlage an dem zu erwärmenden Bauteil bestimmt ist. Wenigstens einem der Polstücke oder/und dem Anschlagelement oder/und einem mit zumindest einer dieser Komponenten zwangsgekuppelten Konstruktionsteil ist ein die Position des Polstücks bzw. des Anschlagelements bzw. des Konstruktionsteils relativ zu dem Gehäuse erfassender Wegsensor zugeordnet. Der den Spulen Wechselstrom liefernde Generator kann auf den Wegsensor ansprechen, derart, dass die Leistung oder/und die Stromstärke des Wechselstroms oder/und die Zeitdauer der Stromlieferung abhängig von der erfassten Position steuerbar ist. Ein solches Schrumpfgerät stellt sich selbsttätig auf den Bautyp des zu erwärmenden Werkzeughalters ein.

Die Spulen können in Serie zueinander geschaltet sein. Günstiger ist es jedoch, wenn sämtliche Spulen einander parallel geschaltet sind, da hierbei die den Generator belastende Spulenimpedanz klein gehalten werden kann und gegebenenfalls für sich justiert werden kann. Für einen in Umfangsrichtung des Bauteils gleichförmigen Magnetfluss kommt es darauf an, dass die Spulen gleiche Eigenschaften haben und symmetrisch um die Drehachse herum verteilt sind. Dies lässt sich unter anderem dadurch erreichen, dass sämtliche Spulen bezogen auf die Radialrichtung gleichsinnig gewickelt sind und gleiche Windungszahl haben.

Zur Verkürzung der Schrumpfbetriebszeit wird das erwärmte Bauteil üblicherweise anschließend an die Induktionserwärmung gekühlt. Das Bauteil kann hierzu in eine gesonderte Kühlstation überführt werden. In einer zweckmäßigen Ausgestaltung wird das Bauteil unmittelbar in der Induktionsspuleneinheit gekühlt. Hierzu ist im Bereich des Aufnahmeraums wenigstens eine auf das Bauteil gerichtete Düse für ein Kühlmittel z.B. Kühlwasser oder Kühlluft angeordnet.

Im Folgenden werden Ausführungsbeispiele der Erfindung anhand von Zeichnungen näher erläutert. Hierbei zeigt:
Fig. 1 eine Axialansicht einer Induktionsspuleneinheit gemäß der Erfindung, gesehen entlang einer Linie I-I in Fig. 2, zur Hälfte im Schnitt und zur Hälfte in Draufsicht;
Fig. 2 ein Axiallängsschnitt durch die Induktionsspuleneinheit, gesehen entlang einer Linie II-II in Fig. 1;
Fig.3 eine teilweise Radialansicht der Induktionsspuleneinheit, gesehen entlang einer Linie III-III in Fig. 1;
Fig. 4 eine teilweise Radialansicht der Induktionsspuleneinheit, gesehen in Richtung eines Pfeils IV in Fig. 1;
Fig. 5 einen Detailschnitt, gesehen entlang einer Linie V-V in Fig. 4;
Fig. 6 eine Axialansicht der Induktionsspuleneinheit in radial geöffnetem Zustand;
Fig. 7 und 8 Axiallängsschnitte durch Polstücke der Induktionsspuleneinheit zur Erläuterung der Betriebsweise;
Fig. 9 ein Axialquerschnitt durch die Polstücke zur Erläuterung der Betriebsweise;
Fig. 10 eine Seitenansicht einer ersten Variante eines bei der Induktionsspuleneinheit der Fig. 1 verwendbaren Polstücks;
Fig. 11 einen Querschnitt durch das Polstück, gesehen entlang einer Linie XI-XI in Fig. 10;
Fig. 12 eine Seitenansicht einer zweiten Variante eines bei der Induktionsspuleneinheit der Fig. 1 verwendbaren Polstücks;
Fig. 13 eine Schnittansicht des Polstücks, gesehen entlang einer Linie XIII-XIII in Fig. 12;
Fig. 14 eine Seitenansicht einer dritten Variante eines bei der Induktionsspuleneinheit der Fig. 1 verwendbaren Polstücks;
Fig. 15 eine Schnittansicht des Polstücks, gesehen entlang einer Linie XV-XV in Fig. 14;
Fig. 16 eine Seitenansicht einer vierten Variante eines bei der Induktionsspuleneinheit der Fig. 1 verwendbaren Polstücks;
Fig. 17 eine Schnittansicht des Polstücks, gesehen entlang einer Linie XVII-XVII in Fig.16;
Fig. 18 eine Seitenansicht einer fünften Variante eines bei der Induktionsspuleneinheit der Fig. 1 verwendbaren Polstücks;
Fig. 19 eine Schnittansicht des Polstücks, gesehen entlang einer Linie XIX-XIX bei Fig.18;
Fig. 20 eine teilweise aufgebrochene Seitenansicht einer sechsten Variante eines bei der Induktionsspuleneinheit der Fig. 1 verwendbaren Polstücks;
Fig. 21 eine Schnittansicht durch das Polstück, gesehen entlang einer Linie XXI-XXI in Fig. 20;
Fig. 22 eine Schnittansicht durch eine bei der Induktionsspuleneinheit der Fig. 1 verwendbaren Baueinheit aus einem Polstück und einer Spule;
Fig. 23 eine perspektivische, schematische Darstellung einer Variante einer Induktionsspuleneinheit;
Fig. 24 ein Axialquerschnitt durch die Induktionsspuleneinheit, gesehen entlang einer Linie XXIV-XXIV in Fig. 23;
Fig. 25 einen Axialquerschnitt durch eine Variante der Induktionsspuleneinheit aus Fig. 23 und
Fig. 26 ein Blockschaltbild zur Erläuterung einer bei den Induktionsspuleneinheiten der Fig. 1 bis 25 verwendbaren, temperaturüberwachten Stromversorgung.

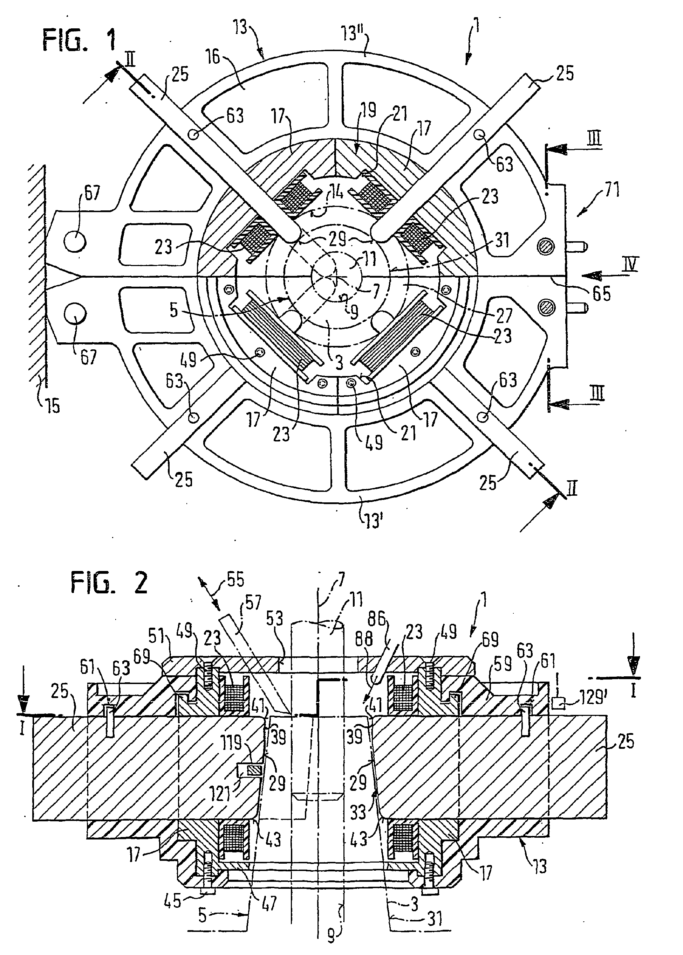

Die Fig. 1 und 2 zeigen eine Induktionsspuleneinheit 1 mit deren Hilfe ein bei 3 durch eine strichpunktierte Linie angedeuteter Hülsenteil aus elektrisch leitendem Material, hier Stahl, eines Werkzeughalters 5 auf induktivem Weg erwärmt werden kann. Der zu seiner Betriebsdrehachse 7 im Wesentlichen rotationssymmetrische Werkzeughalter 5 hat eine zu der Betriebsdrehachse 7 zentrische Aufnahmeöffnung 9 für die Presssitzaufnahme eines Schafts 11 eines im übrigen nicht dargestellten, im Arbeitsbetrieb um die Drehachse 7 rotierenden Rotationswerkzeugs, beispielsweise eines Bohrers oder Fräsers. Der Werkzeugschaft 11 hat bezogen auf den Innendurchmesser der zylindrischen Aufnahmeöffnung 9 Übermaß und ist in den Hülsenteil 3 eingeschrumpft. Bei Erwärmen weitet sich der Hülsenteil 3 auf, so dass der Werkzeugschaft 11 in die Aufnahmeöffnung 9 eingesteckt oder aus ihr entnommen werden kann. Nach dem Abkühlen wird der in der Aufnahmeöffnung 9 eingesetzte Werkzeugschaft 11 im Presssitz in dem Hülsenteil 3 gehalten. Der Werkzeughalter 5 kann Bestandteil einer Arbeitsspindel einer Werkzeugmaschine sein oder auf der dem Hülsenteil 3 axial abgewandten Seite mit einer herkömmlichen Spindelkupplung, wie zum Beispiel einer Steilkegelkupplung oder einer Hohlschaftkupplung (HSK-Kupplung) versehen sein.

Die Induktionsspuleneinheit 1 hat ein aus elektrischem Isolationsmaterial gefertigtes, im Wesentlichen ringförmiges Gehäuse 13, das in nicht näher dargestellter Weise an einer Führung 15 eines Schrumpfgeräts betriebsmäßig axial verschiebbar gehalten ist. Im dargestellten Ausführungsbeispiel ist das Gehäuse 13 als steifes Gussformteil ausgebildet, das zur Gewichtsminderung mit Kammern 16 versehen ist und in dem die Komponenten der lnduktionsspuleneinheit 1 eingebaut sind. Tragender Bestandteil des Gehäuses kann aber auch ein Vergussmassering sein, in den, wie bei 14 angedeutet, die Komponenten dauerhaft eingegossen sind, insbesondere so, dass sie von dem Vergussmassering im Wesentlichen vollständig umschlossen sind. Das Gehäuse 13 kann gegebenenfalls hierbei als "verlorene Form" ausgenutzt werden.

Das Gehäuse 13 umschließt einen aus Segmenten 17 zusammengesetzten Jochring 19 aus einem weichmagnetischen, magnetflussleitenden Material, beispielsweise Ferrit, der an der Ringinnenseite jedes Jochsegments 17 in einer Tasche 21 eine aus Hochfrequenzlitze gewickelte Spule 23 trägt. Die Spulen 23 sind, bezogen auf ihren Durchmesser flach und mit zur Drehachse 11 radialer Spulenachse angeordnet.

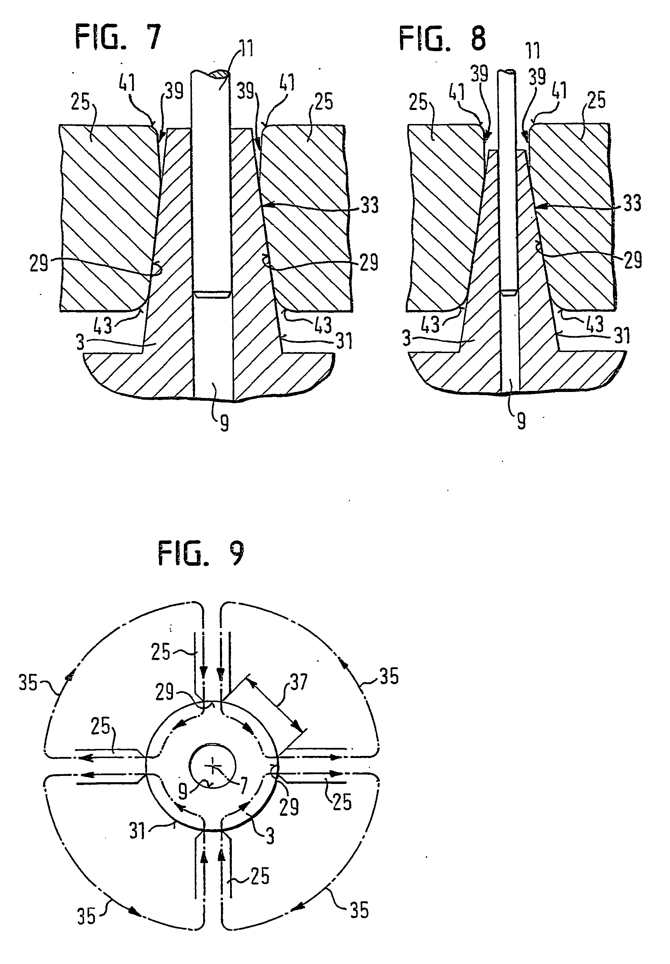

Jede der Spulen 23 umschließt ein Polstück 25 aus weichmagnetischem, magnetflussleitendem Material, beispielsweise Ferrit, welches an dem Gehäuse 13, dem Jochring 19 und gegebenenfalls den Spulen 23 radial zur Drehachse 7 verschiebbar geführt ist. Jedes Polstück 25 durchdringt hierbei die Spule 23 und ragt in einen durch die Spulen 23 begrenzten Aufnahmeraum 27 für die Aufnahme des Hülsenteils 3 des Werkzeughalters 5. Wie in Fig. 1 für die dort links dargestellten Polstücke 25 durch eine gestrichelte Linie angedeutet ist, können die Polstücke 25 radial bis nahe an die Drehachse 7 herangeschoben werden, so dass Hülsenteile 3 mit stark unterschiedlichem Durchmesser erwärmt werden können, wie dies die Fig. 7 und 8 zeigen.

Die Polstücke 25 sind als flache Platten ausgebildet, deren Flachseiten jeweils parallel zur Drehachse 7 verlaufen. Die Polstücke 25 haben der Drehachse 7 zugewandte Endflächen 29, mit denen sie in Linienkontakt oder einem in Umfangsrichtung schmalen flächigen Kontakt an der äußeren Umfangsfläche 31 des Hülsenteils 3 anliegen. Die Umfangsfläche 31 ist, wie bei herkömmlichen Werkzeughaltern üblich, konisch ausgebildet und dementsprechend verlaufen die Endflächen 29 der Polstücke 25 in einem ersten Bereich 33 entsprechend dem Konuswinkel der Umfangsfläche 31 gleichsinnig zur Drehachse 7 geneigt.

Die Polstücke 25 sind rotationssymmetrisch zur Drehachse 7 in gleichen Winkelabständen angeordnet und bilden zusammen mit dem Jochring 19 magnetisch leitende Kreise, die den von den Spulen 23 im Betrieb erzeugten Magnetfluss auf den Hülsenteil 3 konzentrieren. Die Spulen 23 werden so erregt, dass, wie Fig. 9 zeigt, der durch strichpunktierte Linien 35 angedeutete Magnetfluss in jeweils in Umfangsrichtung benachbarten Polstücken 25 entgegengesetzte Flussrichtung hat. Dementsprechend ist eine geradzahlige Anzahl Polstücke 25 vorgesehen. Zweckmäßigerweise sind vier oder mehr Polstücke vorgesehen. Da die Polstücke 25 linienförmig oder nur auf einem in Umfangsrichtung verhältnismäßig schmalen Bereich an der Umfangsfläche 31 des Hülsenteils 3 anliegen, verläuft der Magnetfluss zwischen benachbarten Polstücken 25 weitgehend in dem Hülsenteil 3. Die Endflächen 29 verjüngen sich, wie der achsnormale Schnitt in Fig. 9 zeigt, zur Drehachse 7 hin, wodurch einerseits die Anlagefläche, mit der jedes Polstück 25 an dem Hülsenteil 3 anliegt verringert wird und andererseits der Umfangsabstand 37 zwischen benachbarten Polstücken 25 zur Minderung eventueller Streuflüsse vergrößert wird. Die Endflächen 29 können hierzu keilförmig angefast sein, wie dies Fig. 9 zeigt, oder aber entsprechend Fig. 1 ballig gerundet, insbesondere halbkreisförmig gerundet sein.

Da die Umfangsfläche 31 des Hülsenteils 3 konisch ist, nimmt die Umfangslänge der Umfangsfläche 31 in Verjüngungsrichtung, d.h. zur Austrittseite des Werkzeugschafts 11 hin ab. Mit abnehmender Umfangslänge nimmt jedoch auch der Widerstand ab, den der durch das magnetische Wechselfeld in dem Hülsenteil 3 induzierte, den Hülsenteil 3 erwärmende Strom vorfindet. Um dennoch in axialer Richtung für eine möglichst gleichmäßige Erwärmung zu sorgen, schließt sich zur Austrittseite des Werkzeugs an den ersten Bereich 33 der Endfläche 29 ein zweiter Bereich 39 an, in welchem die Endfläche 29 in einem radialen Abstand zur Erzeugenden der Umfangsfläche 31 verläuft, der größer ist als der radiale Abstand der Endfläche 29 von der Erzeugenden in dem ersten Bereich 33. Im dargestellten Ausführungsbeispiel verläuft die Endfläche 29 im Bereich 39 achsparallel zur Drehachse 7; sie kann in dem Bereich 39 aber auch schräg zur Drehachse 7, insbesondere zur Werkzeugaustrittseite von der Drehachse 7 weggerichtet verlaufen. Fig. 7 zeigt hierbei die Verhältnisse für einen Hülsenteil 3 mit großem Durchmesser, bei welchem die Polstücke 25 mit dem zweiten Bereich 39 die Umfangsfläche 31 in axialer Richtung vollständig überlappen. Fig. 8 zeigt die Verhältnisse für einen Hülsenteil 3 mit kleinerem Durchmesser, der für das Spannen von kleinen Werkzeugschäften 11 bestimmt ist und dementsprechend in der Regel auch axial kurz ausgeführt ist. Um auch im Durchmesser kleine Hülsenteile 3 ohne Austausch der Polstücke 25 erwärmen zu können, können die Polstücke 25 zur Werkzeugaustrittseite hin mit dem Bereich 39 ihrer Endflächen 29 axial überstehen ohne befürchten zu müssen, dass zugleich auch der Werkzeugschaft 11 mit erwärmt wird, was das Ausspannen des Werkzeugs erschweren würde. Der Bereich 39 der Endflächen 29 sorgt für eine Vergrößerung des radialen Abstands der Polstücke 25 zum Werkzeugschaft 11 und damit aufgrund des erhöhten Luftwegs für die Schwächung der eventuell auf dem Werkzeugschaft 11 wirkenden Streufelder.

Es hat sich gezeigt, dass im Bereich der axial voneinander entfernt gelegenen Enden der Endflächen 29 sich erhöhte Konzentrationen des Magnetflusses ergeben und sich der Hülsenteil 3 dementsprechend in diesen Bereichen in unerwünschter Weise stärker erwärmt als der Rest des Hülsenteils. Um dies zu verhindern, sind die axial im Abstand voneinander liegenden Ränder 41 bzw. 43 der Endflächen 29 abgerundet. Der auf Grund der Abrundung sich ergebende größere Luftabstand zum Hülsenteil 3 sorgt für eine gleichmäßigere Erwärmung auch im Bereich der axialen Randbereiche der Polstücke 25. Die Abrundung des Rands 41 auf der Werkzeugaustrittseite kann gegebenenfalls entfallen, da hier bereits durch den Bereich 39 der Endfläche 29 einer übermäßigen Erwärmung entgegengewirkt wird.

Wie am besten Fig. 2 zeigt, sind die Jochsegmente 17 an dem Gehäuse 13 befestigt, hier bei 45 angeschraubt und haben auf ihrer der Werkzeugaustrittseite axial abgewandten Seite einen radial nach innen vorstehenden Ringbund 47 zur magnetischen Abschirmung des Aufnahmeraums 27. Auf der axial gegenüberliegenden Seite ist mit Schrauben 49 eine im Wesentlichen ringscheibenförmige Abschirmplatte 51 befestigt, die den Aufnahmeraum 27 auf der Werkzeugaustrittseite schirmt.

Im Betrieb tritt der Werkzeugschaft 11 durch eine zentrische Öffnung 53 der Abschirmplatte 51. Ein an dem Gehäuse 13 in nicht näher dargestellter Weise mit axialer Komponente (Pfeil 55) justierbar einstellbarer Abstandhalter 57 sorgt durch Anlage an der axialen Stirnfläche des Hülsenteils 3 für eine reproduzierbar vorbestimmte Positionierung der Induktionsspuleneinheit 1 relativ zu dem Hülsenteil 3.

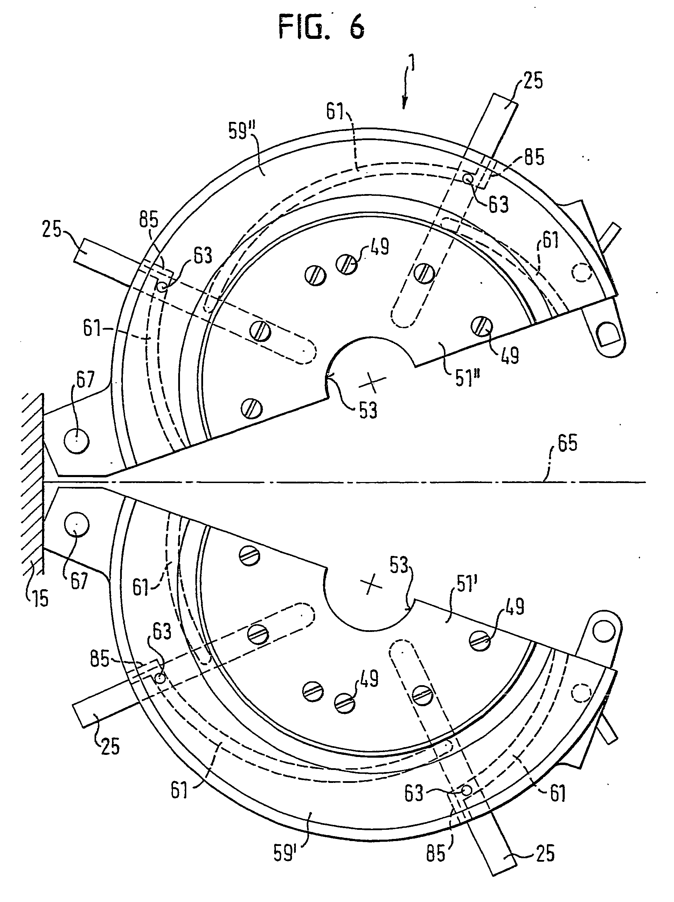

Zur Erleichterung der Handhabung ist an dem Gehäuse 13 eine ringförmige Stellscheibe 59 koaxial zur Drehachse 7 drehbar gelagert. Die Stellscheibe 59 hat, wie die Fig. 2 und 6 zeigen, die Polstücke kreuzende Spiralnuten 61 in die von den Polstücken 25 axial abstehende Stifte 63 eingreifen. Die Spiralnuten 61 bilden Schrägflächenantriebe für die Polstücke 25, so dass durch Drehen der Stellscheibe 59 sämtliche Polstücke 25 gemeinsam zur Drehachse 7 hin oder von der Drehachse 7 weg verschoben werden. Die Stifte 63 sitzen hierbei mit radialem Spiel in den Spiralnuten 61, so dass im Betrieb das Magnetfeld die Polstücke 25 unter Ausgleich eventueller Toleranzen in den Anlagekontakt zum Hülsenteil 3 ziehen kann.

Sämtliche, die Drehachse 7 ringförmig umschließenden Komponenten der Induktionsspuleneinheit 1, sind entlang einer die Drehachse 7 einschließenden Durchmesserebene 65 in zwei Hälften geteilt, die mittels eines Scharniers 67 mit zur Drehachse 7 paralleler Schwenkachse verbunden sind und zwischen einer in Fig. 1 dargestellten ringförmig geschlossenen Stellung und einer in Fig. 6 dargestellten geöffneten Stellung schwenkbar sind. So ist das Gehäuse 13 in zwei Gehäusehälften 13' und 13" geteilt. Die Jochsegmente 17 des Jochrings 19 sind so angeordnet, dass sie in der Teilungsebene 65 aneinanderstoßen. Der Stellring 59 umfasst zwei Stellringhälften 59' und 59", von denen jede Hälfte für sich koaxial zur Drehachse 7 drehbar an einer hinterschnittenen Ringschulter 69 der Jochsegmente 17 des Jochrings 19 radial geführt und zwischen dem Gehäuse 13 und dem Abschirmring 51 axial fixiert ist. Schließlich besteht auch der Abschirmring 51 aus zwei Ringhälften 51' und 51 ".

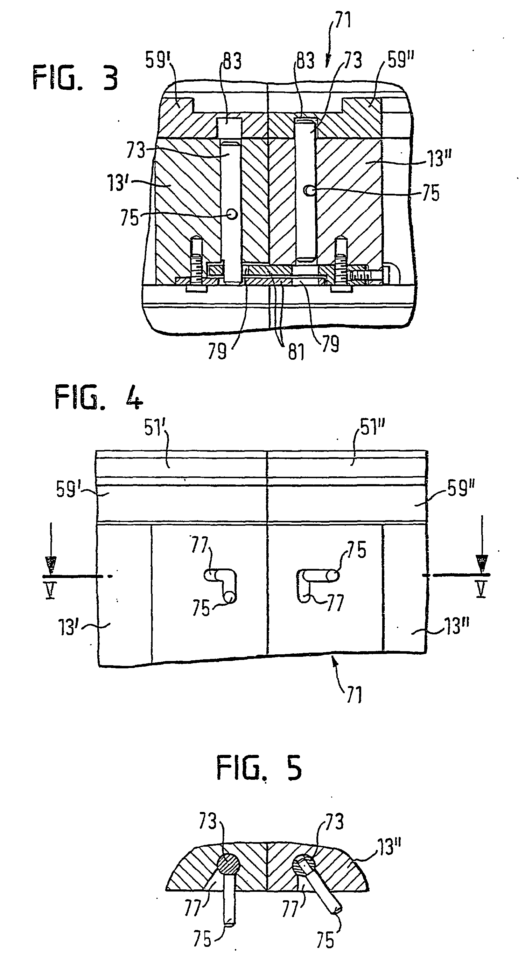

Auf der dem Scharnier 67 diametral gegenüberliegenden Seite ist das Gehäuse 13 mit einer Kupplungsvorrichtung 71 versehen, die die Gehäusehälften 13' und 13" in der geschlossenen Stellung miteinander kuppelt und die Hälften 59' und 59" des Stellrings 59 in der geöffneten Stellung relativ zu den Gehäusehälften 13', 13" arretiert. Wie am besten die Fig. 3 bis 5 zeigen, hat die Kupplungsvorrichtung 71 achsparallel zur Drehachse 7 in den Gehäusehälften 13' und 13" geführte Riegelbolzen 73, deren Handhabungsstifte 75 durch Winkelschlitze 77 nach außen aus den Gehäusehälften 13' bzw. 13" austreten. Die Riegelbolzen 73 lassen sich dementsprechend manuell zwischen ihren axialen Endstellungen verschieben und durch Schwenken der Handhabungsstifte 75 in den Winkelschlitzen 77 arretieren. In ihrer dem Stellring 59 fernen Endstellung greifen die Riegelbolzen 73 in Öffnungen 79 von Riegelplatten 81 ein, die an der jeweils anderen Gehäusehälfte angeschraubt sind und kuppeln die Gehäusehälften 13' und 13" in der geschlossenen Stellung (Fig. 1) miteinander.

In der axial gegenüberliegenden Schiebestellung geben die Riegelbolzen 79 die Riegelplatten 81 frei, wobei sie jedoch in Öffnungen 83 der Stellringhälften 59' bzw. 59" eingreifen und diese Stellringhälften an den Gehäusehälften 13' bzw. 13" fixieren. Fig. 3 zeigt der Erläuterung wegen den Riegelbolzen 73 der Gehäusehälfte 13' in der das Gehäuse 13 kuppelnden Stellung, während der Riegelbolzen 73 der Gehäusehälfte 13" die Stellringhälfte 59" drehfest an der Gehäusehälfte 13" fixiert.

Unterschiedliche Typen von Werkzeughaltern können unterschiedliche Konuswinkel ihrer Hülsenteile haben. Für den angestrebten Linienkontakt der Polstücke 25 muss deshalb gegebenenfalls auch der Neigungswinkel der Endfläche 29 im Bereich 33 an den Konuswinkel der Umfangsfläche 31 angepasst werden. In dem anhand der Fig. 1 bis 6 erläuterten Ausführungsbeispiel kann der Satz Polstücke 25 radial aus dem Gehäuse 13 herausgezogen werden und durch einen anderen Satz Polstücke mit veränderter Neigung der Endfläche 29 ersetzt werden. Um die Polstücke 25 ohne Zerlegen der Induktionsspuleneinheit 1 tauschen zu können, haben die Spiralnuten 61 an einem ihrer Enden, hier ihren radial äußeren Enden einen zum Umfang des Stellrings 59 offenen Auslauf 85, der die Stifte 63 beim Herausziehen der Polstücke 25 freigibt (Fig. 6). Der Auslauf 85 erstreckt sich radial oder gegensinnig zur daran anschließenden Spiralnut 61, um zu verhindern, dass die Polstücke 25 bereits durch Drehen des Stellrings 59 frei kommen. Es versteht sich, dass der Auslauf 85 alternativ oder zusätzlich auch zum Innenumfang des Stellrings 59 hin vorgesehen sein kann, derart, dass die Polstücke 25 nach radial innen entnehmbar sind.

Der justierbare Abstandhalter 57 sorgt dafür, dass die radial verstellbaren Polstücke 25 axial zu dem den Werkzeugschaft 11 spannenden Bereich des Hülsenteils 3 ausgerichtet werden. Üblicherweise nimmt die radiale Breite des freien Stirnendes des Hülsenteils 3 mit abnehmendem Durchmesser des Werkzeugschafts 11 gleichfalls ab. Darüber hinaus verkürzt sich üblicherweise die axiale Spannlänge des Hülsenteils 3 mit abnehmendem Durchmesser des Werkzeugschafts 11. Um dem Rechnung zu tragen, ist zweckmäßigerweise der Abstandhalter 57 schräg zur Drehachse 7 verstellbar.

Mit Hilfe des Stellrings 59 können die Polstücke 25 gemeinsam radial verstellt werden. Um auch die Justierung des Abstandhalters 57 zu erleichtern, ist dieser zweckmäßigerweise über ein Verstellgetriebe, beispielsweise ein Hebelgetriebe oder ein Schrägflächengetriebe entweder mit zumindest einem der Polstücke 25 oder dem Stellring 59 zwangsgekuppelt, so dass bei der radialen Verstellbewegung der Polstücke 25 zugleich auch der Abstandhalter 57 geeignet justiert wird.

Üblicherweise wird der Werkzeughalter 5 nach dem Ein- oder Ausschrumpfen des Werkzeugs in eine gesonderte Kühlstation überführt, in der er auf Umgebungstemperatur abgekühlt wird. Die Überführung in die Kühlstation kann entfallen, wenn, wie Fig. 2 zeigt, im Bereich des Aufnahmeraumes 27 wenigstens eine auf den Hülsenteil 3 gerichtete Düse 86, vorzugsweise mehrere dieser Düsen in Umfangsrichtung verteilt angeordnet sind, die einen Kühlmittelstrahl 88, z.B. einen Kühlwasserstrahl oder Kühlluftstrahl auf den Hülsenteil 3 richten.

Im Folgenden werden Varianten der Induktionsspuleneinheit oder einzelne ihrer Komponenten erläutert. Soweit hier und im Folgenden auf bereits erläuterte Komponenten Bezug genommen wird, sind die Komponenten mit denselben Bezugszahlen bezeichnet und zur Unterscheidung mit einem Buchstaben versehen. Auf die vorangegangene Beschreibung inklusive der Beschreibung eventueller Varianten wird Bezug genommen. Es wird darauf hingewiesen, dass die Merkmale der einzelnen Ausführungsbeispiele untereinander kombinierbar sind.

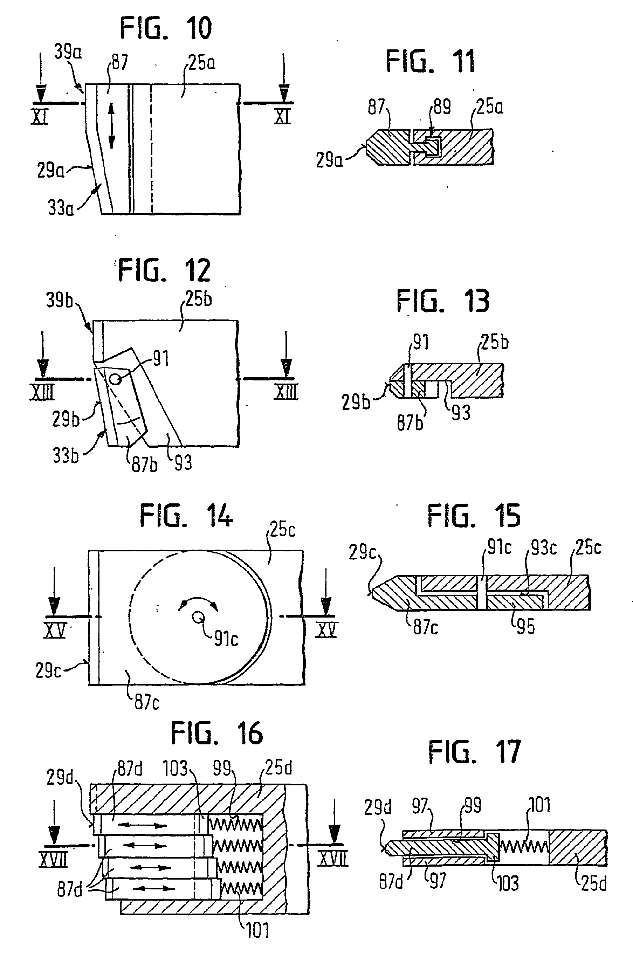

Bei der vorangegangen erläuterten Ausgestaltung der Induktionsspuleneinheit werden zur Anpassung an unterschiedliche Konturen der Hülsenteile des Werkzeughalters die Polstücke insgesamt ausgetauscht. Die Fig. 10 und 11 zeigen ein Polstück 25a, das an seinem der Drehachse zugewandten Ende ein die Endfläche 29a mit ihren Bereichen 33a und 39a bildendes Endstück 87 auswechselbar trägt. Aus mehreren Sätzen derartiger Endstücke 87 mit jeweils unterschiedlichen Neigungswinkeln der Endfläche 29a kann dann der Satz Endstücke ausgewählt werden, dessen Neigungswinkel dem Konuswinkel des Hülsenteils des Werkzeughalters angepasst ist. Die Endstücke 87 sind im dargestellten Ausführungsbeispiel mit einer längs der Drehachse verlaufenden Schiebeführung in Form einer hinterschnittenen Nut-Leisten-Führung 89 mit dem Polstück 25a verbunden.

Die Fig. 12 und 13 zeigen ein Polstück 25b, bei welchem das im ersten Bereich 33b die Endfläche 29b bildende Endstück 87b mittels einer tangential zur Drehachse verlaufenden Achse 91 schwenkbar an dem Polstück 25b gelagert ist. Das Endstück 87 sitzt hierbei in einer durch das Polstück 25b gebildeten, das Endstück 87 führenden Tasche 93. Entsprechend dem Polstück 25a hat auch das Polstück 25b insgesamt im Wesentlichen die Form einer Platte.

Die Fig. 14 und 15 zeigen, im Unterschied zu dem Polstück 25b, bei welchem der zweite Bereich 39b der Endfläche 29b fest mit dem Polstück 25b verbunden ist, ein Polstück 25c, dessen die Endfläche 29c bildendes Endstück 87c sich über die gesamte axiale Höhe des Polstücks 25c erstreckt und wiederum an einer tangential zur Drehachse verlaufenden Achse 91 c schwenkbar mit dem Polstück 25c verbunden ist. Das Endstück 87c hat einen in eine Tasche 93c des Polstücks 25c eingreifenden Schwanzabschnitt 95.

Die Fig. 16 und 17 zeigen ein Polstück 25d mit einer durch Seitenwände 97 begrenzten, zur Endfläche 29d offenen Kammer 99, in der radial zur Drehachse verschiebbar ein Stapel Endstücke 87d radial verschiebbar geführt sind. Die Endstücke 87d bilden Teilbereiche der Endfläche 29d und werden durch Federn 101 zur Drehachse hin vorgespannt, so dass sie sich selbsttätig an die konische Umfangsfläche 31 des Hülsenteils 3 des Werkzeughalters 5 anlegen können. Den Endflächenabschnitten 29d radial abgewandt tragen die Endstücke 87d Köpfe 103, die verhindern, dass die Endstücke 87d aus der Kammer 99 ausgeschoben werden. Die Federn 101 bestehen aus nicht magnetischem, vorzugsweise auch elektrisch nicht leitendem Material, zum Beispiel einem wärmefesten, elastischen Kunststoffmaterial oder können auch ganz entfallen, da die Endstücke 87d durch das Magnetfeld an den Hülsenteil gezogen werden. Die Endflächenabschnitte 29d verlaufen parallel zur Drehachse und sorgen für eine stufenweise Approximation der konischen Umfangsfläche des Hülsenteils.

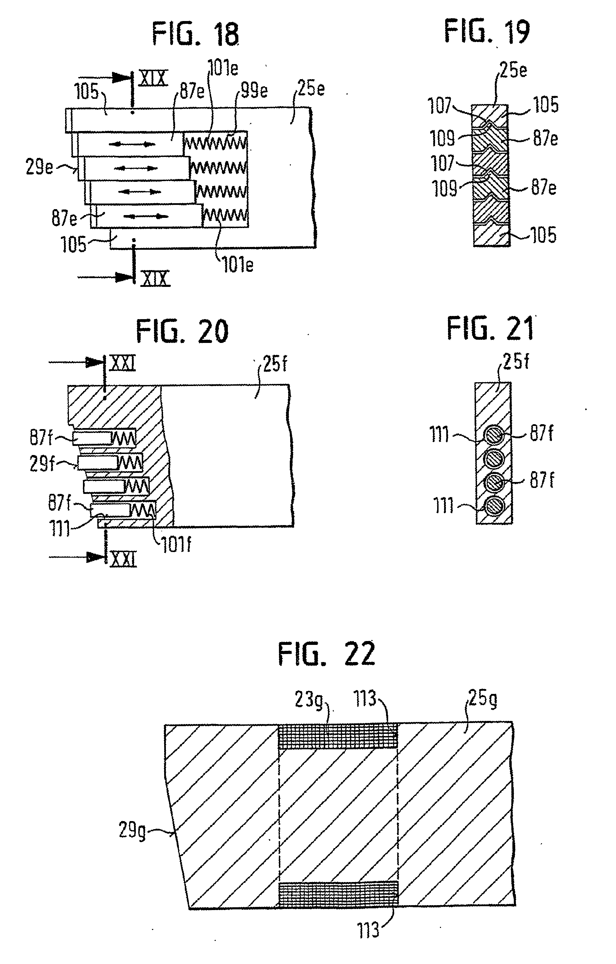

Die Fig. 18 und 19 zeigen ein Polstück 25e, welches sich von dem Polstück 25d' der Fig. 16 und 17 im Wesentlichen nur durch die Art der die Endflächenabschnitte 29e bildenden, in Form eines Stapels angeordneten Endstücke 87e unterscheidet. Der Stapel der radial zur Drehachse beweglichen Endstücke 87e sitzt in einer durch Gabelvorsprünge 105 axial begrenzten Kammer 99e, wobei die Endstücke 87e untereinander und relativ zu den Gabelvorsprüngen 105 durch radial in Führungsnuten 107 des jeweils einen Teils eingreifende Führungsrippen des jeweils anderen Teils relativ zueinander radial verschiebbar geführt sind. Die in die Führungsnuten 107 eingreifenden Führungsrippen 109 führen die Teile tangential zur Drehachse. Die Endstücke 87e sind wiederum durch Federn 101e vorgespannt, die auch hier gegebenenfalls entfallen können.

Die Fig. 20 und 21 zeigen eine weitere Variante eines Polstücks 25f mit einer Vielzahl in Richtung der Drehachse nebeneinander angeordneter, zylindrischer Endstücke 87f, die in radialen Bohrungen 111 verschiebbar geführt und gegebenenfalls durch Federn 101f zur Drehachse hin belastet sind. Die aus den Bohrungen 111 austretenden Enden der Endstücke 87f bilden die Endfläche 29f.

Bei der anhand der Fig. 1 bis 6 erläuterten Variante der Induktionsspuleneinheit 1 sind die Spulen 23 an dem Jochring 19 gehalten. Fig. 22 zeigt eine Variante eines Polstücks 25g, dessen Endfläche 29g entsprechend der Ausführungsform der Fig. 1 bis 6 gestaltet ist. Die den Polstücken 25g zugeordneten Spulen 23g sind jedoch nicht an dem auch hier vorhandenen, von den Polstücken 25g durchsetzten Jochring vorgesehen, sondern bilden zusammen mit dem Polstück 25g eine radial verschiebbare Baueinheit. Im dargestellten Ausführungsbeispiel sitzt die das Polstück 25g umschließende Wicklung der Spule 23g in Aussparungen 113. Die Wicklung der Spule 23g kann allseitig konturgleich mit dem Polstück 25g abschließen oder aber ganz oder teilweise über dessen Umfangskontur vorstehen.

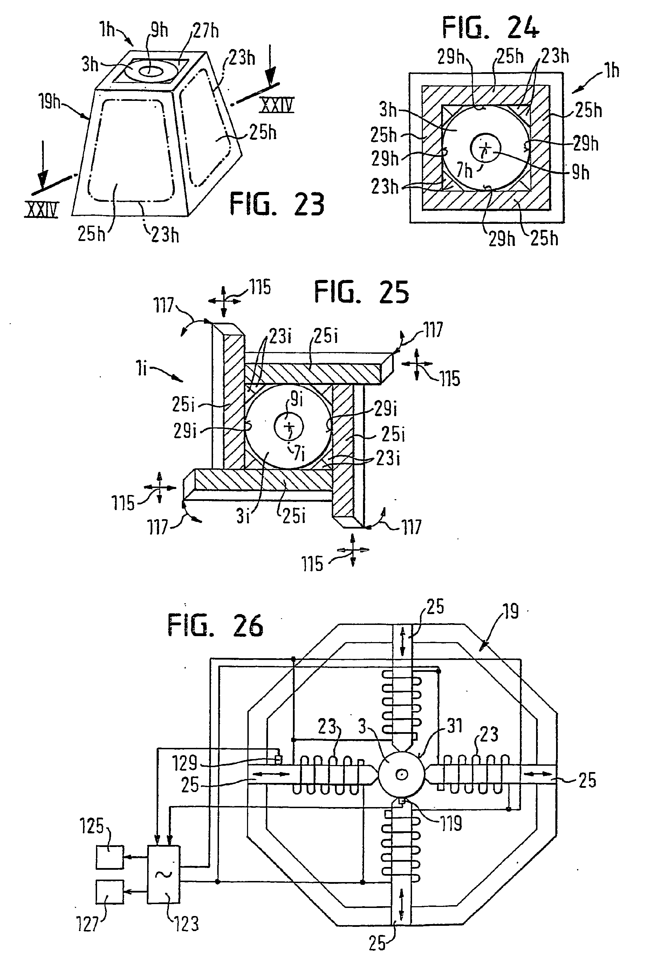

Bei den vorangegangen erläuterten Varianten der Induktionsspuleneinheit sind die in linienförmigen Anlagenkontakt zum Hülsenteil des Werkzeughalters bringbaren Polstücke als radial zu einem Jochring verschiebbare Polstücke ausgebildet. Die Fig. 23 und 24 zeigen eine Variante einer Induktionsspuleneinheit 1 h, deren Polstücke 25h als im Wesentlichen ebene Wandplatten eines den Aufnahmeraum 27h für den Hülsenteil 3h umschließenden, pyramidenstumpfförmigen Jochrings 19h bilden. Die Wandplatten 25h bilden mit ihren inneren Wandflächen 29h die Endfläche der Polstücke und liegen mit den inneren Wandflächen 29h in zumindest angenähert linienförmigem Anlagekontakt an der äußeren, konusförmigen Umfangsfläche des Hülsenteils an. Die den Wandplatten 25h zugeordneten Spulen 23h sind in den Eckbereichen auf der Innenseite des pyramidenförmigen Jochrings 19h angeordnet, wo sie gegebenenfalls in ringförmige Aussparungen der Wandplatten 25h eingreifen. Es versteht sich, dass auch der pyramidenförmige Jochring 19h gegebenenfalls in einer die Drehachse 7 enthaltenden Diagonalfläche teilbar ist, wie dies anhand der Fig. 6 erläutert wurde.

Fig. 25 zeigt eine Variante 1i der Induktionsspuleneinheit aus den Fig. 23 und 24, die sich von dieser Einheit im Wesentlichen nur dadurch unterscheidet, dass die die Polstücke bildenden Wandplatten 25i zur Anpassung an den Durchmesser des Hülsenteils 3i tangential oder/und radial zur Drehachse verschiebbar sind, wie dies durch Pfeile 115 angedeutet ist. Zur Anpassung der Neigung der Wandplatten 25i an den Konuswinkel des Hülsenteils 3i können die Wandplatten 25i relativ zur Drehachse 7i entsprechend den Pfeilen 117 neigbar ausgeführt sein.

Bei den vorangegangen erläuterten Ausführungsformen der Induktionsspuleneinheit liegen die Polstücke im Betrieb an der äußeren Umfangsfläche des Hülsenteils des Werkzeughalters in Anlagekontakt an oder sind der Umfangsfläche eng benachbart. Dieser Umstand kann, wie Fig. 2 zeigt, dazu ausgenutzt werden, in der für den Anlagekontakt bestimmten Endfläche 29 des Polstücks 25 einen Temperatursensor 119 anzuordnen, beispielsweise in einer zu der Endfläche 29 offenen Aussparung 121 des Polstücks 25. Der Temperatursensor 119 kann dann, betriebsmäßig gegebenenfalls federnd vorgespannt in direkten Anlagekontakt zur Umfangsfläche 31 des Hülsenteils treten, was eine sehr genaue Temperaturmessung an der Oberfläche des Hülsenteils 3 erlaubt.

Fig. 26 zeigt schematisch ein elektrisches Blockschaltbild der Induktionsspuleneinheit, bei der die Induktionsspulen 23 zueinander sämtlich parallel geschaltet an einen Wechselstromgenerator 123 angeschlossen sind. Der Wechselstromgenerator 123 spricht auf den Temperatursensor 119 an und schaltet den Spulenstrom der Spulen 23 ab, sobald die Umfangsfläche 31 des Hülsenteils 3 eine vorbestimmte für den Aufweitvorgang hinreichende Temperatur erreicht hat. Es versteht sich, dass gegebenenfalls mehrere solcher Temperatursensoren in axialer Richtung oder/und in Umfangsrichtung verteilt vorgesehen sein können. Die Spulen sind aus Symmetriegründen bezogen auf die Radiusrichtung sämtlich gleichsinnig gewickelt, wobei durch die Polung ihrer Anschlüsse die in Umfangsrichtung abwechselnde Magnetflussrichtung sichergestellt ist, wie dies anhand von Fig. 9 erläutert wurde.

Alternativ oder zusätzlich zur vorstehend erläuterten temperaturabhängigen Abschaltfunktion des Wechselstromgenerators 123 kann eine auf den Temperatursensor 119 ansprechende Warneinrichtung 125 vorgesehen sein, die bei Erreichen oder Überschreiten der vorbestimmten Temperatur ein optisches oder/und akustisches Warnsignal für die manuelle Beendigung des Heizbetriebs abgibt. Alternativ oder auch zusätzlich kann auch eine an den Temperatursensor 119 angeschlossene Anzeigeeinrichtung 127 vorgesehen sein, die den aktuellen, erfassten Temperaturwert auf einem Display zum Beispiel zahlenmäßig anzeigt.

Üblicherweise wird die Leistung oder/und die Ausgangsstromstärke oder/und die Dauer der Spulenerregung an dem Wechselstromgenerator 123 entsprechend dem zu erwärmenden Werkzeughalter voreingestellt, da die für die Erwärmung eines Werkzeughalters mit geringem Durchmesser benötigte Energie geringer ist als für einen Werkzeughalter mit großem Durchmesser. Um den Wechselstromgenerator 123 selbsttätig steuern zu können, spricht dieser auf einen Wegsensor 129 an, der die radiale Position zumindest eines der Polstücke 25 erfasst. Die radiale Position des Polstücks 25 ist ein Maß für die zur Erwärmung des Werkzeughalters benötigte Energie. Es versteht sich, dass der Wegsensor 129 auch die Drehposition des Stellrings 59 erfassen kann, wie dies in Fig. 2 bei 129' angedeutet ist. Insbesondere kann in der letztgenannten Variante der Wegsensor 129' die Position am Außenumfang des Stellrings 59 bezogen auf einen relativ großen Stellweg erfassen.

Es versteht sich, dass die Schaltungsanordnung der Fig. 26 auch bei den übrigen vorstehend erläuterten Ausführungsformen der Induktionsspuleneinheit genutzt werden kann.

## Patentansprüche

1. Induktionsspuleneinheit zum Erwärmen eines relativ zu einer Achse (7) rotationssymmetrischen Bauteils (3) aus elektrisch leitendem Material, insbesondere eines Hülsenteils, welches in einer zu der Achse zentrischen Aufnahmeöffnung (9) einen langgestreckten Gegenstand im Presssitz hält, vorzugsweise zum Erwärmen des Hülsenteils eines Werkzeughalters (5), der in seiner zur Drehachse zentrischen Aufnahmeöffnung (9) einen Schaft eines Rotationswerkzeugs (11) insbesondere eines Bohr- und Fräswerkzeugs im Presssitz hält, umfassend:
- einen zur Achse (7) zentrischen Aufnahmeraum (27) für das Bauteil (3),
- eine insbesondere geradzahlige Anzahl in gleichen Winkelabständen um die Achse (7) herum verteilt angeordneter Polstücke (25) aus einem Material mit weichmagnetischen, Magnetfluss leitenden Eigenschaften,
- mehrere mit Wechselstrom speisbare Spulen (23) zur Erzeugung magnetischer Flüsse in den Polstücken (25), derart, dass der magnetische Fluss in Umfangsrichtung benachbarter Polstücke (25) entgegengesetzte Richtung hat,
**daduch gekennzeichnet, dass** die Polstücke (25) der Achse (7) radial zugewandte Endflächen (29) haben, die auf dem größeren Teil ihrer axialen Höhe in einem ersten Bereich (33) längs der Erzeugenden einer äußeren Umfangsfläche (31) des Bauteils (33) in linienförmigen oder flächenförmigen Anlagekontakt oder nahezu einen solchen Anlagekontakt mit der äußeren Umfangsfläche (31) des Bauteils (3) bringbar sind,
und dass sich zumindest auf axial einer Seite des ersten Bereichs (33) wenigstens einer der Endflächen (29), insbesondere jeder der Endflächen (29) an den ersten Bereich (33) ein zweiter Bereich (39) anschließt, in welchem die Endfläche (29) mit einem größeren radialen Abstand von der Erzeugenden der äußeren Umfangsfläche (31) als im ersten Bereich (33) verläuft.

2. Induktionsspuleneinheit nach Anspruch 1, **dadurch gekennzeichnet, dass** die Endfläche (29) im zweiten Bereich (39) gegen die Erzeugende der Umfangsfläche (31) geneigt verläuft, wobei sich der radiale Abstand aus der Erzeugenden mit wachsendem axialem Abstand vom ersten Bereich (33) vergrößert.

3. Induktionsspuleneinheit nach Anspruch 2, **dadurch gekennzeichnet, dass** die Erzeugende eine konusförmige Umfangsfläche des Bauteils (3) definiert und die Endflächen (29) in dem ersten Bereich (33) gleichsinnig zur Achse (7) geneigt sind und dass sich der zweite Bereich (39) der Endflächen (29) auf der im Durchmesser kleineren Seite des ersten Bereichs (33) anschließt.

4. Induktionsspuleneinheit nach einem der Ansprüche 1 bis 3, **dadurch gekennzeichnet, dass** das Bauteil als den Schaft eines Rotationswerkzeugs (11) in der Aufnahmeöffnung (9) zentrisch zur Drehachse (7) im Presssitz aufnehmendes Hülsenteil (3) eines Werkzeughalters (5) ausgebildet ist und der zweite Bereich (39) auf der zur Werkzeugaustrittseite des Hülsenteils (3) benachbarten Seite des ersten Bereichs (33) vorgesehen ist.

5. lnduktionsspuleneinheit nach einem der Ansprüche 1 bis 4, **dadurch gekennzeichnet, dass** die der Achse (7) radial zugewandte Endfläche (29) jedes Polstücks (25) an einem ihrer axialen Enden oder an beiden axialen Enden eine von der Achse (7) weg verlaufende, insbesondere gerundete Randflächenabschnitt (41, 43) hat.

6. Induktionsspuleneinheit nach Anspruch 5, **dadurch gekennzeichnet, dass** das Bauteil als den Schaft eines Rotationswerkzeugs (11) in der Aufnahmeöffnung (9) zentrisch zur Drehachse (7) im Presssitz aufnehmendes Hülsenteil (3) eines Werkzeughalters (5) ausgebildet ist und der von der Drehachse (7) weg verlaufende Randflächenabschnitt (41, 43) zumindest an dem der Werkzeugaustrittsseite axial entfernt gelegenen Ende der Endfläche (29) vorgesehen ist.

7. lnduktionsspuleneinheit nach einem der Ansprüche 1 bis 6,
**dadurch gekennzeichnet, dass** die Polstücke (25) die Form flacher Scheiben haben, deren Flachseiten im Wesentlichen parallel zur Achse (7) verlaufen und deren der Achse (7) radial zugewandte Endflächen (29) auf dem größten Teil ihrer axialen Höhe in linienförmigen oder flächenförmigen Anlagekontakt oder nahezu in einen solchen Anlagekontakt mit der äußeren Umfangsfläche (31) des Bauteils (3) bringbar sind.

8. lnduktionsspuleneinheit nach einem der Ansprüche 1 bis 7,
**dadurch gekennzeichnet, dass** die der Achse (7) zugewandte Endfläche (29) jedes Polstücks (25) zumindest in ihrem Anlagekontaktbereich (33) zur Achse (7) hin verjüngt ist.

9. Induktionsspuleneinheit nach Anspruch 8,
**dadurch gekennzeichnet, dass** die Endfläche (29) in dem Anlagekontaktbereich (33) konvex verrundet ist, insbesondere teilkreiszylindrisch verrundet ist.

10. lnduktionsspuleneinheit nach Anspruch 8,
**dadurch gekennzeichnet, dass** die Endfläche (29) in dem Anlagekontaktbereich (33) keilförmig verjüngt ist.

11. Induktionsspuleneinheit nach einem der Ansprüche 1 bis 10,
**dadurch gekennzeichnet, dass** die Polstücke (25) relativ zu einem den Aufnahmeraum (27) konzentrisch zur Achse (7) umschließenden Jochring (19) aus weichmagnetischem, Magnetfluss leitenden Material radial verschiebbar sind und die Spulen (23) radial innerhalb des Jochrings (19) angeordnet sind.

12. Induktionsspuleneinheit nach Anspruch 11,
**dadurch gekennzeichnet, dass** jedem Polstück (25) eine gesonderte Spule (23) zugeordnet ist, die ihr Polstück (25) umschließt.

13. lnduktionsspuleneinheit nach Anspruch 12,
**dadurch gekennzeichnet, dass** der Jochring (19) aus Segmenten (17) zusammengesetzt ist.

14. Induktionsspuleneinheit nach einem der Ansprüche 11 bis 13,
**dadurch gekennzeichnet, dass** die Polstücke (25) Öffnungen des Jochrings (19) verschiebbar durchsetzen.

15. Induktionsspuleneinheit nach einem der Ansprüche 11 bis 14, **dadurch gekennzeichnet, dass** der Jochring (19) die ihm zugewandten, axialen Stirnflächen der Spulen (23) allseitig überdeckt.

16. Induktionsspuleneinheit nach einem der Ansprüche 11 bis 15,
**dadurch gekennzeichnet, dass** jede Spule (23) in einer in dem Jochring (19) radial eingesenkten Tasche (21) zumindest über einen Teil ihrer axialen Spulenhöhe eingreift.

17. Induktionsspuleneinheit nach einem der Ansprüche 11 bis 16,
**dadurch gekennzeichnet, dass** jede Spule (23g) zu einer radial verschiebbaren Baueinheit mit dem von ihr umschlossenen Polstück (25g) vereinigt ist.

18. lnduktionsspuleneinheit nach einem der Ansprüche 11 bis 16,
**dadurch gekennzeichnet, dass** der Jochring (19) und die Spulen (23) in einem ringförmigen Gehäuse (13) aus elektrisch isolierenden Material fixiert sind.

19. Induktionsspuleneinheit nach Anspruch 18,
**dadurch gekennzeichnet, dass** das Gehäuse einen an den Jochring und den Spulen angegossenen, zumindest die Spulen umschließenden Ring aus Kunststoff-Vergussmasse umfasst,

20. Induktionsspuleneinheit nach einem der Ansprüche 11 bis 19,
**dadurch gekennzeichnet, dass** der Jochring (19) auf zumindest einer seiner Stirnseiten, insbesondere auf beiden Stirnseiten eine mit einer zentrischen Durchtrittsöffnung, (53) für das Bauteil (3) versehene Ringscheibe (51) aus weichmagnetischem, Magnetfluss leitenden Material in axialem Abstand von den Polstücken (25) trägt.

21. Indukfionsspuleneinheit nach einem der Ansprüche 1 bis 20,
**dadurch gekennzeichnet, dass** die Polstücke (25) relativ zu einem den Aufnahmeraum (27) ringförmig umschließenden Gehäuse (13) radial verschiebbar geführt sind und mit einem koaxial zur Achse (7) drehbeweglich an einer den Aufnahmeraum (27) umschließenden Ringführung (69) des Gehäuses (13) geführten Stellring (59) gekuppelt sind, derart, dass bei einer Drehbewegung des Stellrings (59) die Polstücke (25) gemeinsam eine radiale Verschiebebewegung ausführen.

22. lnduktionsspuleneinheit nach einem der Ansprüche 1 bis 21, **dadurch gekennzeichnet, dass** das Gehäuse (13) in zwei zum radialen Öffnen des Aufnahmeraums (27) radial zur Achse (7) relativ zueinander bewegbare Baugruppen, insbesondere hälftig, unterteilt ist,
und dass eine Kupplungsvorrichtung (71) die Baugruppen lösbar miteinander verbindet.

23. Induktionsspuleneinheit nach einem der Ansprüche 1 bis 20,
**dadurch gekennzeichnet, dass** die Polstücke (25) relativ zu einem den Aufnahmeraum (27) ringförmig umschließenden Gehäuse (13) radial verschiebbar geführt sind und mit einem koaxial zur Achse (7) drehbeweglich an einer den Aufnahmeraum (27) umschließenden Ringführung (69) des Gehäuses (13) geführten Stellring (59) gekuppelt sind, derart, dass bei einer Drehbewegung des Stellrings (59) die Polstücke (25) gemeinsam eine radiale Verschiebebewegung ausführen,
dass das Gehäuse (13) einschließlich des daran koaxial drehbar geführten Stellrings (59) in zwei zum radialen Öffnen des Aufnahmeraums (27) radial zur Achse (7) relativ zueinander bewegbare Baugruppen, insbesondere hälftig, unterteilt ist,
und dass eine Kupplungsvorrichtung (71) die Baugruppen betriebsmäßig lösbar verbindet.

24. lnduktionsspuleneinheit nach Anspruch 23
**dadurch gekennzeichnet, dass** das Gehäuse (13) zwei mittels eines Scharniers (67) radial zur Achse (7) klappbar miteinander verbundene Gehäusesegmente (13', 13") umfasst, von denen jedes ein Segment des in zwei Stellringsegmente (59', 59") unterteilten Stellrings (59) für sich drehbar jedoch radial fixiert trägt,
und dass die Kupplungsvorrichtung (71) in einer ersten Stellung die Gehäusesegmente (13', 13") miteinander verbindet und die Stellringsegmente (59', 59") für eine Drehbewegung freigibt und in einer zweiten Stellung die Gehäusesegmente (13', 13") für das Öffnen des Aufnahmeraums (27) freigibt und die Stellringsegmente (59', 59") drehfest an den Gehäusesegmenten (13', 13") fixiert.

25. Induktionsspuleneinheit nach Anspruch 24,
**dadurch gekennzeichnet, dass** die Kupplungsvorrichtung (71) je ein zwischen den beiden Stellungen bewegbares Riegelstück (73) an jedem der Gehäusesegmente (13', 13") aufweist.

26. Induktionsspuleneinheit nach Anspruch 25,
**dadurch gekennzeichnet, dass** die Riegelstücke (73) als achsparallel zur Achse (7) an den Gehäusesegmenten (13', 13") zwischen den beiden Stellungen verschiebbare Schubriegel ausgeführt sind.

27. Induktionsspuleneinheit nach einem der Ansprüche 23 bis 26,
**dadurch gekennzeichnet, dass** der Stellring (59) mit Kupplungsorganen (63) der Polstücke (25) zusammenwirkende Spiralführungen (61) aufweist, die die Drehbewegung des Stellrings (59) in eine gemeinsame radiale Schiebebewegung der Polstücke (25) umsetzen.

28. Induktionsspuleneinheit nach Anspruch 27,
**dadurch gekennzeichnet, dass** die Spiralführungen (61) am Umfang des Stellrings (59), insbesondere dessen Außenumfang, münden und die Polstücke (25) radial entnehmbar in dem Gehäuse (13) geführt sind.

29. Induktionsspuleneinheit nach einem der Ansprüche 1 bis 28,
**dadurch gekennzeichnet, dass** die Polstücke (25) zumindest auf den größten Teil ihrer axialen Höhe der Achse (7) radial zugewandte Endflächen (29) haben, die in linienförmigen oder flächenförmigen Anlagekontakt oder nahezu in einen solchen Anlagekontakt mit der äußeren Umfangsfläche (31) des Bauteils (3) bringbar sind, wobei die Kontur der Endfläche (29) betriebsmäßig änderbar ist.

30. lnduktionsspuleneinheit nach Anspruch 29,
**dadurch gekennzeichnet, dass** die Endfläche (29b, c) an einem um eine tangential zur Drehachse verlaufende Schwenkachse (91, 91c) schwenkbar an dem Polstück (25b, c) gehaltenen Endstück (87b, c) vorgesehen ist.

31. Induktionsspuleneinheit nach Anspruch 29,
**dadurch gekennzeichnet, dass** die Endfläche (29a) an einen betriebsmäßig auswechselbar an dem Polstück (25a) gehaltenen Endstück (87) vorgesehen ist.

32. lnduktionsspuleneinheit nach Anspruch 29,
**dadurch gekennzeichnet, dass** das Polstück (25d, e, f) mehrere relativ zueinander radial zur Achse (7) verschiebbare Endstücke (87d, e, f) umfasst, deren der Achse (7) radial zugewandte Stirnflächen (29d, e, f) gemeinsam die Endfläche des Polstücks (25d, e, f) bilden.

33. lnduktionsspuleneinheit nach Anspruch 32,
**dadurch gekennzeichnet, dass** die Endstücke (87d, e, f) an dem Polstück (25d, e, f) oder/und aneinander radial beweglich geführt sind.

34. Induktionsspuleneinheit nach Anspruch 33,
**dadurch gekennzeichnet, dass** die Endstücke (87d, e) zu einem an dem Polstück (25d, e) radial beweglich geführten Stapel zusammengefasst sind und in dem Stapel aneinander radial beweglich geführt sind.

35. lnduktionsspuleneinheit nach Anspruch 33,
**dadurch gekennzeichnet, dass** die Endstücke (87f) im Wesentlichen Zylinderform haben und in radialen Öffnungen (111), insbesondere Bohrungen das Polstück (25f) radial beweglich geführt sind.

36. Induktionsspuleneinheit nach Anspruch 29, **dadurch gekennzeichnet, dass** an dem Gehäuse ein Stellring (5A) koaxial zur Achse (7) gelagert ist, dass der Stellring (59) mit Kopplungsorganen (63) der Polstücke zusammenwirkende Spiralführungen (61) aufweist, die die Drehbewegung des Stellrings (59) in eine gemeinsame radiale Stellbewegung der Polstücke (25) umsetzen und dass die Spiralführungen (61) am Umfang des Stellrings (59), insbesondere an dessen Außenumfang, münden und die Polstücke (25) radial entnehmbar in dem Gehäuse (13) geführt sind.

37. Induktionsspuleneinheit nach einem der Ansprüche 1 bis 6,
**dadurch gekennzeichnet, dass** die Polstücke im Wesentlichen ebene Wandflächen (25h, i) eines den Aufnahmeraum (27h) umschließenden pyramidenstumpfförmigen Jochrings (19h) bilden, wobei die Wandplatten (25h, i) mit ihren die Endflächen der Polstücke bildenden inneren Wandflächen (29h, i) in zumindest angenähert linienförmigen Anlagekontakt oder nahezu in einen solchen Anlagekontakt mit der äußeren, konusförmigen Umfangsfläche des Bauteils (3h, i) bringbar sind.

38. Induktionsspuleneinheit nach Anspruch 37,
**dadurch gekennzeichnet, dass** die Wandplatten (25i) zur Anpassung an den Durchmesser des Bauteils (3i) tangential oder/und radial zur Achse (7i) verschiebbar geführt sind oder/und zur Anpassung an den Konuswinkel des Bauteils (3i) relativ zur Achse (7i) neigbar geführt sind.

39. Induktionsspuleneinheit nach einem der Ansprüche 1 bis 38,
**dadurch gekennzeichnet, dass** in der in Anlagekontakt oder nahezu in Anlagekontakt mit der äußeren Umfangsfläche (31) des Bauteils (3) bringbaren Endfläche (29) oder nahe dieser Endfläche zumindest eines der Polstücke (25) wenigstens ein in direkten Anlagekontakt mit der Umfangsfläche bringbarer Temperatursensor (119) angeordnet ist.

40. Induktionsspuleneinheit nach Anspruch 39, **dadurch gekennzeichnet, dass** die Spulen (23) an einen den Wechselstrom liefernden Generator (123) angeschlossen sind,
und dass der Generator (123) auf den Temperatursensor (119) anspricht und den Wechselstrom abschaltet, wenn der Temperatursensor (119) eine Temperatur gleich oder höher als eine vorbestimmte Temperatur erfasst.

41. Induktionsspuleneinheit nach Anspruch 39 oder 40, **dadurch gekennzeichnet, dass** eine auf den Temperatursensor (119) ansprechende Signalisieranordnung (125) vorgesehen ist, die ein optisches oder/und akustisches Signal erzeugt, wenn der Temperatursensor (119) eine Temperatur gleich oder höher als eine vorbestimmte Temperatur erfasst.

42. Induktionsspuleneinheit nach einem der Ansprüche 39 bis 41, **dadurch gekennzeichnet, dass** eine auf den Temperatursensor (119) ansprechende Anzeigeanordnung (127) vorgesehen ist, die den Wert der von dem Temperatursensor (119) erfassten Temperatur anzeigt.

43. lnduktionsspuleneinheit nach einem der Ansprüche 1 bis 42,
**dadurch gekennzeichnet, dass** das Bauteil als den Schaft eines Rotationswerkzeugs (11) in der Aufnahmeöffnung (9) zentrisch zur Drehachse (7) im Presssitz aufnehmender Hülsenteil (3) eines Werkzeughalters (5) ausgebildet ist,
dass die Polstücke (25) an einem den Aufnahmeraum (27) ringförmig umschließenden Gehäuse (13) verschiebbar geführt sind
und dass an dem Gehäuse (13) ein in axialer oder/und radialer Richtung beweglich justierbarer Abstandhalter (57) geführt ist.

44. lnduktionsspuleneinheit nach Anspruch 43, **dadurch gekennzeichnet, dass** die Polstücke (25) und der Abstandhalter (57) für eine gemeinsame Bewegung miteinander zwangsgekuppelt sind.

45. Induktionsspuleneinheit nach einem der Ansprüche 1 bis 44, **dadurch gekennzeichnet, dass** die Polstücke (25) an einem den Aufnahmeraum (27) ringförmig umschließenden Gehäuse (13) verschiebbar geführt sind oder/und an dem Gehäuse (13) ein in axialer oder/und radialer Richtung bewegliches Anschlagelement, insbesondere ein beweglich justierbarer Abstandhalter (57), geführt ist, welches im Betrieb zur Anlage an dem zu erwärmenden Bauteil (3) bestimmt ist, dass wenigstens einem der Polstücke oder/und dem Anschlagelement oder/und einem mit zumindest einer dieser Komponenten zwangsgekuppelten Konstruktionsteil ein die Position des Polstücks (25) bzw. des Anschlagelements bzw. des Konstruktionsteils relativ zu dem Gehäuse (13) erfassender Wegsensor (129) zugeordnet ist
und dass die Spulen (23) an einen den Wechselstrom liefernden, auf den Wegsensor (129) ansprechenden Generator (123) angeschlossen sind, dessen Leistung oder/und Stromstärke des gelieferten Wechselstroms oder/und Zeitdauer der Stromlieferung abhängig von der erfassten Position steuerbar ist.

46. Induktionsspuleneinheit nach einem der Ansprüche 1 bis 45,
**dadurch gekennzeichnet, dass** sämtliche Spulen (23) einander parallel geschaltet sind.

47. Induktionsspuleneinheit nach einem der Ansprüche 1 bis 46,
**dadurch gekennzeichnet, dass** sämtliche Spulen (23) bezogen auf die Radialrichtung gleichsinnig gewickelt sind und gleiche Windungszahl haben.

48. Induktionsspuleneinheit nach einem der Ansprüche 1 bis 47,
**dadurch gekennzeichnet, dass** wenigstens vier Polstücke (25) in Umfangsrichtung verteilt vorgesehen sind, von denen jedem eine gesonderte Spule (23) zugeordnet ist.

49. Induktionsspuleneinheit nach einem der Ansprüche 1 bis 48,
**dadurch gekennzeichnet, dass** im Bereich des Aufnahmeraums (27) wenigstens eine auf das Bauteil (3) gerichtete Düse (86) für die Zuführung von Kühlmittel, insbesondere Kühlwasser oder Kühlluft vorgesehen ist.

## Claims

1. Induction coil unit for heating a component (3) made of an electrically conducting material which is rotationally-symmetrical relative to a axis (7), in particular a sleeve part, which in a mounting opening (9) central to the axis holds a longitudinally extended object in a press-fit, preferably for heating the sleeve part of a tool holder (5), which in its mounting opening (9) central to the rotary axis holds a shaft of a rotational tool (11) in a press-fit in particular a drilling and cutting tool comprising:
- a mounting space (27) for the component (3) central to the axis (7),
- in particular an even number of polar parts (25) arranged spaced apart at regular intervals about the axis (7) made from a material with soft-magnetic properties conducting magnetic flux,
- several coils (23) which can be fed with alternating current for generating magnetic fluxes in the polar parts (25), such that the magnetic flux has the opposite direction in circumferential direction of adjacent polar parts (25),
**characterised in that** the polar parts (25) of the axis (7) have radially facing end faces (29), which on the largest portion of their axial height in a first section (33) along the generator of an outer circumferential surface (31) of the component (33) can be brought into linear or surface bearing contact or almost such bearing contact with the outer circumferential surface (31) of the component (3),
and **in that** at least axially on one side of the first section (33) of at least one of the end faces (29), in particular each of the end faces (29), a second section (39) adjoins the first section (33), in which second section the end face (29) runs with a greater radial spacing from the generator of the outer circumferential surface (31) than in the first section (33).

2. Induction coil unit according to claim 1, **characterised in that** the end face (29) is inclined in the second area (39) against the generator of the circumferential surface (31), whereby the radial distance increases from the generator with increasing axial distance from the first section (33).

3. Induction coil unit according to claim 2, **characterised in that** the generator defines a conical circumferential face of the component (3) and the end faces (29) are inclined in the first section (33) in the same sense of rotation to the axis (7), and **in that** the second section (39) of the end faces (29) adjoins the side of the first section (33) which is smaller in diameter.

4. Induction coil unit according to one of claims 1 to 3, **characterised in that** the component is designed as the sleeve part (3) of a tool holder (5) mounting the shaft of a rotary tool (11) in the mounting opening (9) central to the rotary axis (7) in a press-fit, and the second section (39) is provided on the side of the first section (33) adjacent to the tool exit side of the sleeve part (3).

5. Induction coil unit according to one of claims 1 to 4, **characterised in that** the end face (29) of each polar part (25) radially facing the axis (7) on one of its axial ends or on both axial ends has an edge face section (41, 43) moving away from the axis (7) which is in particular rounded in form.

6. Induction coil unit according to claim 5, **characterised in that** the component is designed as the shaft of a rotational tool (11) in the mounting opening (9) central to the rotary axis (7) in the press-fit mounting sleeve part (3) of a tool holder (5), and the edge face section (41, 43) moving away from the rotary axis (7) is provided at least at the end of the end face (29) axially removed from the tool exit side.

7. Induction coil unit according to one of claims 1 to 6, **characterised in that** the polar parts (25) have the shape of flat discs, the flat sides of which are essentially parallel to the axis (7) and the end faces (29) of which radially facing the axis (7) on the greatest portion of their axial height can be brought into linear or flat bearing contact or almost into such bearing contact with the outer circumferential surface (31) of the component (3).

8. Induction coil unit according to one of claims 1 to 7, **characterised in that** the end face (29) of each polar part (25) facing the axis (7) is tapered at least in its bearing contact section (33) towards the axis (7).

9. Induction coil unit according to claim 8, **characterised in that** the end face (29) in the bearing contact area (33) is convexly rounded, in particular is partly cylindrical.

10. Induction coil unit according to claim 8, **characterised in that** the end face (29) in the bearing contact area (33) is tapered in a wedge shape.

11. Induction coil unit according to one of claims 1 to 10, **characterised in that** the polar parts (25) are radially displaceably relative to a yoke ring (19) surrounding the holding space (27) concentric to the axis (7) made of soft-magnetic material conducting magnetic flux, and the coils (23) are arranged radially inside the yoke ring (19).

12. Induction coil unit according to claim 11, **characterised in that** a separate coil (23) is assigned to each polar part (25), which surrounds its polar part (25).

13. Induction coil unit according to claim 12, **characterised in that** the yoke ring (19) is composed of segments (17).

14. Induction coil unit according to one of claims 11 to 13, **characterised in that** the polar parts (25) displaceably penetrate the openings of the yoke ring (19).

15. Induction coil unit according to one of claims 11 to 14, **characterised in that** the yoke ring (19) covers on all sides the axial end faces of the coils (23) facing the former.

16. Induction coil unit according to one of claims 11 to 15, **characterised in that** each coil (23) engages in a pocket (21) sunk radially in the yoke ring (19) at least over a portion of its axial coil height.

17. Induction coil unit according to one of claims 11 to 16, **characterised in that** each coil (23g) is assembled to form a radially displaceable component with the polar part (25g) surrounded thereby.

18. Induction coil unit according to one of claims 11 to 16, **characterised in that** the yoke ring (19) and the coils (23) are fixed in an annular housing (13) made from electrically insulating material.

19. Induction coil unit according to claim 18, **characterised in that** the housing comprises a ring made from a plastic casting mass cast onto the yoke ring and coils and surrounding at least the coils.

20. Induction coil unit according to one of claims 11 to 19, **characterised in that** the yoke ring (19) on at least one of its end faces, in particular on both end faces supports an annular disc (51) provided with a central through opening (53) for the component (3) made of soft-magnetic material conducting magnetic flux at an axial distance from the polar parts (25).

21. Induction coil unit according to one of claims 1 to 20, **characterised in that** the polar parts (25) are guided radially displaceably relative to a housing (13) annularly surrounding the mounting space (27) and are coupled with an adjusting ring (59) guided coaxially to the axis (7) on a ring guide (69) of the housing (13) surrounding the mounting space (27), such that with a rotational movement of the adjusting ring (59) the polar parts (25) jointly perform a radial displacement movement.

22. Induction coil unit according to one of claims 1 to 21, **characterised in that** the housing (13) is divided, in particular halved, into two component groups, which can be moved relative to one another radially to the axis (7) for radially opening the mounting space (27), and **in that** a coupling device (71) connects the component groups together in a detachable manner.

23. Induction coil unit according to one of claims 1 to 20, **characterised in that** the polar parts (25) are guided radially displaceably relative to a housing (13) annularly surrounding the mounting space (27) and are coupled with an adjusting ring (59) guided coaxially to the axis (7) rotatably on an annular guide (69) of the housing (13) surrounding the mounting space (27), such that with a rotational movement of the adjusting ring (59) the polar parts (25) jointly perform a radial displacement movement, **in that** the housing (13) including the coaxially rotatably guided adjusting ring (59) is divided, in particular halved, into two component groups which can be moved relative to one another radially to the axis (7) for radially opening the holding space (27), and **in that** a coupling device (71) connects the component groups together in a detachable manner.

24. Induction coil unit according to claim 23, **characterised in that** the housing (13) comprises two housing segments (13', 13") connected together by means of a hinge (67) radially to the axis (7), each of which supports rotatably but radially a segment of the adjusting ring (59) divided into two adjusting ring segments (59', 59"),
and **in that** the coupling device (71) in a first position connects the housing segments (13', 13") together and releases the adjusting ring segments (59', 59") for a rotational movement and in a second position releases the housing segments (13', 13") for opening the mounting space (27) and fixes the adjusting ring segments (59', 59") in a rotation-fast manner to the housing segments (13', 13").

25. Induction coil unit according to claim 24, **characterised in that** the coupling device (71) comprises a locking part (73) on each of the housing segments (13', 13") which can be moved between the two positions.

26. Induction coil unit according to claim 25, **characterised in that** the locking parts (73) are designed as sliding bars which are displaceable axially parallel to the axis (7) on the housing segments (13', 13") between the two positions.

27. Induction coil unit according to one of claims 23 to 26, **characterised in that** the adjusting ring (59) with coupling elements (63) of the polar parts (25) has cooperating spiral guides (61), which convert the rotational movement of the adjusting ring (59) into a common radial displacement movement of the polar parts (25).

28. Induction coil unit according to claim 27, **characterised in that** the spiral guides (61) open on the circumference of the adjusting ring (59), in particular its outer circumference, and the polar parts (25) are guided radially removably in the housing (13).

29. Induction coil unit according to one of claims 1 to 28, **characterised in that** the polar parts (25) at least on the largest portion of their axial height of the axis (7) have radially facing end faces (29), which can be brought into linear or surface bearing contact or almost into such bearing contact with the outer circumferential surface (31) of the component (3), whereby the contour of the end face (29) can be changed operationally.

30. Induction coil unit according to claim 29, **characterised in that** the end face (29b, c) is provided on an end piece (87b, c) held pivotably on the polar part (25b, c) about a pivot axis (91, 91 c) tangential to the rotary axis.

31. Induction coil unit according to claim 29, **characterised in that** the end face (29b, c) is provided on an end piece (87) held on a polar part (25a) in an operationally interchangeable manner.

32. Induction coil unit according to claim 29, **characterised in that** the polar part (25d, e, f) comprises several end pieces (87d, e, f) displaceable relative to one another radially to the axis (7), of which end faces (29d, e, f) radially facing the axis (7) together form the end face of the polar part (25d, e, f)

33. Induction coil unit according to claim 32, **characterised in that** the end pieces (87d, e, f) are guided radially on the polar part (25d, e, f) and/or on one another.

34. Induction coil unit according to claim 33, **characterised in that** the end pieces (87d, e) are combined to form a pile guided radially on the polar part (25d, e) and are guided in the pile moving radially on one another.

35. Induction coil unit according to claim 33, **characterised in that** the end pieces (87f) are essentially cylindrical and the polar part (25f) is guided moving radially in radial openings (111), in particular bores.

36. Induction coil unit according to claim 29, **characterised in that** on the housing an adjusting ring (59) is positioned coaxially to the axis (7), **in that** the adjusting ring (59) with coupling elements (63) of the polar parts has cooperating spiral guides (61), which convert the rotational movement of the adjusting ring (59) into a common radial adjustment movement of the polar parts (25), and **in that** the spiral guides (61) are guided on the circumference of the adjusting ring (59), in particular its outer circumference, and the polar parts (25) are guided in the housing (13) to be removable radially.

37. Induction coil unit according to one of claims 1 to 6, **characterised in that** the polar parts essentially form flat wall faces (25h, i) of a pyramid stub-shaped yoke ring (19h) surrounding the mounting space (27h), whereby the wall plates (25h, i) with their inner wall faces (29h, i) forming the end faces of the polar parts can be brought into at least almost linear bearing contact or virtually into such bearing contact with the outer, conical circumferential surface of the component (3h, i).

38. Induction coil unit according to claim 37, **characterised in that** the wall plates (25i) are guided displaceably tangentially and/or radially to the axis (7i) to adjust to the diameter of the component (3i) and/or are inclined to adjust to the conical angle of the component (3i) relative to the axis (7i).

39. Induction coil unit according to one of claims 1 to 38, **characterised in that** in the end face (29) which can be moved into bearing contact or almost into bearing contact with the outer circumferential surface (31) of the component (3) or close to said end face of at least one of the polar parts (25) at least one temperature sensor (119) is arranged which can be brought into direct bearing contact with the circumferential surface.

40. Induction coil unit according to claim 39, **characterised in that** the coils (23) are connected to a generator (123) supplying alternating current, and **in that** the generator (123) responds to the temperature sensor (119) and switches off the alternating current, when the temperature sensor (119) detects a temperature which is equal to or greater than a predetermined temperature.

41. Induction coil unit according to claim 39 or 40, **characterised in that** a signalling arrangement (125) acting on the temperature sensor (119) is provided, which generates an optical and/or acoustic signal when the temperature sensor (119) detects a temperature equal to or greater than a predetermined temperature.

42. Induction coil unit according to one of claims 39 to 41, **characterised in that** a display arrangement (127) acting on the temperature sensor (119) is provided which displays the value of the temperature detected by the temperature sensor (119).

43. Induction coil unit according to one of claims 1 to 42, **characterised in that** the component is designed as the shaft of a rotational tool (11) in the mounting opening (9) central to the rotary axis (7) in the press-fit mounting sleeve part (3) of a tool holder (5), **in that** the polar parts (25) are guided displaceably on a housing (13) annularly surrounding the mounting space (27), and **in that** on the housing (13) a spacer (57) is guided which can be moved adjustably in axial and/or radial direction.

44. Induction coil unit according to claim 43, **characterised in that** the polar parts (25) and the spacer (57) are necessarily coupled together for a joint movement.

45. Induction coil unit according to one of claims 1 to 44, **characterised in that** the polar parts (25) are guided displaceably on a housing (13) annularly surrounding the mounting space (27) and/or a stop element moveable in axial and/or radial direction, in particular an adjustable spacer (57), is guided on the housing (13), which during operation is intended for bearing against the component (3) to be heated, **in that** at least one of the polar parts and the stop element and/or a construction part necessarily coupled with at least one of these components is assigned a motion sensor (129) determining the position of the polar part (25) or stop element or construction part relative to the housing (13), and **in that** the coils (23) are connected to a generator (123) supplying the alternating current and responding to the motion sensor (129), the output of which and/or current strength of the supplied alternating current and/or the duration of the current supply can be controlled as a function of the detected position.

46. Induction coil unit according to one of claims 1 to 45, **characterised in that** all of the coils (23) are connected parallel to one another.

47. Induction coil unit according to one of claims 1 to 46, **characterised in that** all of the coils (23) are wound in the same direction relative to the radial direction and have the same number of windings.

48. Induction coil unit according to one of claims 1 to 47, **characterised in that** at least four polar parts (25) are provided distributed in circumferential direction, each of which is allocated a separate coil (23).

49. Induction coil unit according to one of claims 1 to 48, **characterised in that** in the region of the mounting space (27) at least one nozzle (86) directed towards the component (3) is provided for supplying coolant, in particular cooling water or cooling air.

## Revendications

1. Unité de bobine de self destinée à chauffer un composant (3) à symétrie de révolution par rapport à un axe (7), en matériau électriquement conducteur, en particulier un élément de manchon, lequel maintient avec ajustage serré un objet s'étendant longitudinalement dans une ouverture de réception (9) centrée par rapport à l'axe, de préférence destinée à chauffer l'élément de manchon d'un porte-outil (5) qui maintient par ajustage serré un arbre d'un outil rotatif (11), en particulier un outil de perçage ou de fraisage, dans son ouverture de réception (9) centrée par rapport à l'axe de rotation, comprenant :
- un espace de réception (27) centré par rapport à l'axe (7) pour le composant (3),
- un nombre, en particulier pair, d'éléments polarisés (25) agencés et répartis avec des distances angulaires identiques autour de l'axe (7), en un matériau ayant des propriétés magnétiques douces de conduction de flux magnétique,
- plusieurs bobines (23) pouvant être alimentées en courant alternatif destinées à produire des flux magnétiques dans les éléments polarisés (25), de manière à ce que le flux magnétique comporte, dans la direction circonférentielle, des éléments polarisés (25) voisins ayant une direction opposée,
**caractérisée en ce que** les éléments polarisés (25) de l'axe (7) ont des surfaces terminales (29) tournées radialement, lesquelles peuvent être amenées au niveau de la partie plus grande de leur hauteur axiale dans une première zone (33) le long du générateur d'une surface circonférentielle extérieure (31) du composant (33) en contact de circuit de forme linéaire ou surfacique ou un tel contact de circuit similaire avec la surface circonférentielle extérieure (31) du composant (3),
et **en ce que** au moins axialement à un côté de la première zone (33) d'au moins une des surfaces terminales (29), en particulier de chacune des surfaces terminales (29), est connectée à la première zone (33) une deuxième zone (39), dans laquelle la surface terminale (29) se trouve à une distance plus grande radialement du générateur de la surface circonférentielle extérieure (31) que la première zone (33).

2. Unité de bobine de self selon la revendication 1, **caractérisée en ce que** la surface terminale (29) est inclinée dans la deuxième zone (39) par rapport au générateur de la surface circonférentielle (31), la distance radiale du générateur à la première zone (33) augmentant avec une distance axiale croissante.

3. Unité de bobine de self selon la revendication 2, **caractérisée en ce que** le générateur définit une surface circonférentielle conique du composant (3) et les surfaces terminales (29) dans la première zone (33) sont inclinées dans le même sens par rapport à l'axe (7) et **en ce que** la deuxième zone (39) des surfaces terminales (29) est connectée au côté de plus petit diamètre de la première zone (33).

4. Unité de bobine de self selon l'une quelconque des revendications 1 à 3, **caractérisée en ce que** le composant est formé en tant qu'élément de manchon (3) d'un porte-outil (5) recevant avec un ajustage serré l'arbre d'un outil rotatif (11) dans l'ouverture de réception (9) centrée par rapport à l'axe de rotation (7) et la deuxième zone (39) est prévue sur le côté de la première zone (33) voisin du côté de sortie de l'outil de l'élément de manchon (3).

5. Unité de bobine de self selon l'une quelconque des revendications 1 à 4, **caractérisée en ce que** la surface terminale (29) de chaque élément polarisé (25) tournée radialement vers l'axe (7) comporte au niveau d'une de ses extrémités axiales ou au niveau des deux extrémités axiales une section de surface latérale (41, 43) en particulier arrondie, s'éloignant de l'axe (7).

6. Unité de bobine de self selon la revendication 5, **caractérisée en ce que** le composant est formé en tant qu'élément de manchon (3) d'un porte-outil (5) recevant avec un ajustage serré l'arbre d'un outil rotatif (11) dans l'ouverture de réception (9) centrée par rapport à l'axe de rotation (7) et la section de surface latérale (41, 43) s'éloignant de l'axe de rotation (7) est au moins prévue au niveau de l'extrémité de la surface terminale (29) éloignée axialement du côté de sortie de l'outil.

7. Unité de bobine de self selon l'une quelconque des revendications 1 à 6,
**caractérisée en ce que** les éléments polarisés (25) ont la forme de disques plats dont les côtés plats sont sensiblement parallèles à l'axe (7) et dont les surfaces terminales (29) tournées radialement vers l'axe (7) peuvent être amenées au niveau de la grande partie de leur hauteur axiale en contact de circuit de forme linéaire ou surfacique ou un tel contact de circuit similaire avec la surface de réception extérieure (31) du composant (3).

8. Unité de bobine de self selon l'une quelconque des revendications 1 à 7,
**caractérisée en ce que** la surface terminale (29) de chaque élément polarisé (25) tournée vers l'axe (7) est au moins effilée dans sa zone de contact de circuit (33) vers l'axe (7).

9. Unité de bobine de self selon la revendication 8,
**caractérisée en ce que** la surface terminale (29) dans la zone de contact de circuit (33) est arrondie de manière convexe, est en particulier arrondie de manière à former un cylindre semi-circulaire.

10. Unité de bobine de self selon la revendication 8,
**caractérisée en ce que** la surface terminale (29) dans la zone de contact de circuit (33) est effilée de manière cunéiforme.

11. Unité de bobine de self selon l'une quelconque des revendications 1 à 10,
**caractérisée en ce que** les éléments polarisés (25) coulissent radialement par rapport à un anneau de culasse (19) en matériau magnétique doux conducteur de flux magnétique entourant l'espace de réception (27) de manière concentrique à l'axe (7) et les bobines (23) sont agencées radialement à l'intérieur de l'anneau de culasse (19).

12. Unité de bobine de self selon la revendication 11,
**caractérisée en ce qu'**à chaque élément polarisé (25) est associée une bobine séparée (23) qui entoure son élément polarisé (25).

13. Unité de bobine de self selon la revendication 12,
**caractérisée en ce que** l'anneau de culasse (19) est composé de segments (17).

14. Unité de bobine de self selon l'une quelconque des revendications 11 à 13,
**caractérisée en ce que** les éléments polarisés (25) permettent de faire coulisser les ouvertures de l'anneau de culasse (19).

15. Unité de bobine de self selon l'une quelconque des revendications 11 à 14, **caractérisée en ce que** l'anneau de culasse (19) recouvre de tous les côtés les surfaces frontales axiales des bobines (23) tournées vers celui-ci.

16. Unité de bobine de self selon l'une quelconque des revendications 11 à 15, **caractérisée en ce que** chaque bobine (23) s'engrène au moins sur une partie de sa hauteur de bobine axiale dans une poche (21) enclavée radialement dans l'anneau de culasse (19).

17. Unité de bobine de self selon l'une quelconque des revendications 11 à 16, **caractérisée en ce que** chaque bobine (23g) est associée avec l'élément polarisé (25g) qui l'entoure dans un élément pouvant coulisser radialement.

18. Unité de bobine de self selon l'une quelconque des revendications 11 à 16, **caractérisée en ce que** l'anneau de culasse (19) et les bobines (23) sont fixés dans un boîtier (13) en forme d'anneau constitué d'un matériau électriquement isolant.

19. Unité de bobine de self selon la revendication 18,
**caractérisée en ce que** le boîtier comprend un anneau en matière plastique-masse de remplissage monté sur l'anneau de culasse et aux bobines, entourant au moins les bobines.

20. Unité de bobine de self selon l'une quelconque des revendications 11 à 19, **caractérisée en ce que** l'anneau de culasse (19) porte sur au moins une de ses surfaces frontales, en particulier sur les deux surfaces frontales, un disque annulaire (51) dotée d'une ouverture de passage (53) centrée pour le composant (3) et en matériau magnétique doux conducteur de flux magnétique à une distance axiale des éléments polarisés (25).

21. Unité de bobine de self selon l'une quelconque des revendications 1 à 20,
**caractérisée en ce que** les éléments polarisés (25) peuvent coulisser radialement par rapport à un boîtier (13) en forme d'anneau entourant l'espace de réception (27) et sont couplés à un anneau de serrage (59) guidé de manière mobile en rotation coaxialement à l'axe (7) dans un guide annulaire (69) du boîtier (13) entourant l'espace de réception (27), de manière à ce que lors d'une rotation de l'anneau de serrage (59), les éléments polarisés (25) coulissent ensemble radialement.

22. Unité de bobine de self selon l'une quelconque des revendications 1 à 21,
**caractérisée en ce que** le boîtier (13) est divisé en deux blocs pouvant se déplacer l'un par rapport à l'autre, en particulier par moitié, radialement par rapport à l'axe (7) pour ouvrir radialement l'espace de réception (27),
et **en ce qu'**un coupleur (71) connecte les blocs de manière amovible.

23. Unité de bobine de self selon l'une quelconque des revendications 1 à 20,
**caractérisée en ce que** les éléments polarisés (25) peuvent coulisser radialement par rapport à un boîtier (13) en forme d'anneau entourant l'espace de réception (27) et sont couplés à un anneau de serrage (59) guidé de manière mobile en rotation coaxialement à l'axe (7) dans un guide annulaire (69) du boîtier (13) entourant l'espace de réception (27), de manière à ce que lors d'une rotation de l'anneau de serrage (59), les éléments polarisés (25) coulissent ensemble radialement,
**en ce que** le boîtier (13), y compris l'anneau de serrage (59) guidé en rotation coaxialement sur lui, est divisé en deux blocs pouvant se déplacer l'un par rapport à l'autre, en particulier par moitié, radialement par rapport à l'axe (7) pour ouvrir radialement l'espace de réception (27),
et **en ce qu'**un coupleur (71) connecte les blocs de manière amovible.

24. Unité de bobine de self selon la revendication 23,
**caractérisée en ce que** le boîtier (13) comprend deux segments de boîtier (13', 13") connectés ensemble à l'aide d'une charnière (67), de manière à pouvoir être pliés radialement par rapport à l'axe (7), dont chacun des segments de boîtier porte un segment de l'anneau de serrage (59) divisé en deux segments d'anneau de serrage (59', 59") fixé de manière rotative mais toutefois radiale,
et **en ce que** le coupleur (71) connecte ensemble les éléments de boîtier (13', 13") dans une première position et relâche les segments d'anneau de serrage (59', 59") pour un mouvement de rotation, et relâche les segments de boîtier (13', 13") dans une deuxième position pour ouvrir l'espace de réception (27) et fixe les segments d'anneau de serrage (59', 59") aux segments de boîtier (13', 13") d'une manière fixe en rotation.

25. Unité de bobine de self selon la revendication 24,
**caractérisée en ce que** le coupleur (71) comprend un élément de verrouillage (73) pouvant se déplacer entre les deux positions sur chacun des segments de boîtier (13', 13").

26. Unité de bobine de self selon la revendication 25,
**caractérisée en ce que** les éléments de verrouillage (73) sont agencés en tant que verrou coulissant pouvant se déplacer entre les deux positions sur les segments de boîtier (13', 13") de manière parallèle à l'axe (7).

27. Unité de bobine de self selon l'une quelconque des revendications 23 à 26,
**caractérisée en ce que** l'anneau de serrage (59) comporte des guides en spirale (61) coopérant avec des organes de couplage (63) des éléments polarisés (25), lesquels modifient la rotation de l'anneau de serrage (59) dans un coulissage radial conjoint des éléments polarisés (25).

28. Unité de bobine de self selon la revendication 27,
**caractérisée en ce que** les guides en spirale (61) au niveau de la circonférence de l'anneau de serrage (59), en particulier de sa circonférence externe, convergent et les éléments polarisés (25) sont guidés de manière à sortir radialement du boîtier (13).

29. Unité de bobine de self selon l'une quelconque des revendications 1 à 28,
**caractérisée en ce que** les éléments polarisés (25) comportent au moins au niveau de la partie la plus grande de leur hauteur axiale de l'axe (7) des surfaces terminales (29) tournées radialement, lesquelles peuvent être amenées en contact de circuit de forme linéaire ou surfacique ou un tel contact de circuit similaire avec les surfaces circonférentielles extérieures (31) du composant (3), le contour des surfaces terminales (29) pouvant être modifié selon le fonctionnement.

30. Unité de bobine de self selon la revendication 29,
**caractérisée en ce que** la surface terminale (29b, c) est prévue au niveau d'un élément terminal (87b, c) maintenu au niveau de l'élément polarisé (25b, c) de manière pivotante autour d'un axe de pivotement (91, 91c) s'étendant tangentiellement par rapport à l'axe de rotation.

31. Unité de bobine de self selon la revendication 29,
**caractérisée en ce que** la surface terminale (29a) est prévue au niveau d'un élément terminal (87) maintenu au niveau de l'élément polarisé (25a) de manière échangeable selon le fonctionnement.

32. Unité de bobine de self selon la revendication 29,
**caractérisée en ce que** l'élément polarisé (25d, e, f) comporte plusieurs éléments terminaux (87d, e, f) coulissant les uns par rapport aux autres radialement par rapport à l'axe (7), dont les surfaces frontales (29d, e, f) tournées radialement vers l'axe (7) forment ensemble la surface terminale de l'élément polarisé (25d, e, f).

33. Unité de bobine de self selon la revendication 32,
**caractérisée en ce que** les éléments terminaux (87d, e, f) sont guidés au niveau de l'élément polarisé (25d, e, f) ou/et se déplacent radialement les uns par rapport aux autres.

34. Unité de bobine de self selon la revendication 33,
**caractérisée en ce que** les éléments terminaux (87d, e) sont regroupés en un empilement déplaçable radialement au niveau de l'élément polarisé (25d, e) et sont radialement déplaçables les uns par rapport aux autres dans l'empilement.

35. Unité de bobine de self selon la revendication 33,
**caractérisée en ce que** les éléments terminaux (87f) ont sensiblement une forme cylindrique et sont radialement déplaçables dans des ouvertures (111) radiales, en particulier des alésages, de l'élément polarisé (25f).

36. Unité de bobine de self selon la revendication 29, **caractérisée en ce qu'**un anneau de serrage (59) est monté au niveau du boîtier coaxialement à l'axe (7), **en ce que** l'anneau de serrage (59) comporte des guides en spirale (61) coopérant avec des organes de couplage (63) des éléments polarisés, lesquels modifient la rotation de l'anneau de serrage (59) dans un déplacement de serrage conjoint radial des éléments polarisés (25) et **en ce que** les guides en spirale (61) convergent au niveau de la circonférence de l'anneau de serrage (59), en particulier au niveau de sa circonférence externe, et les éléments polarisés (25) sont guidés de manière à sortir radialement du boîtier (13).

37. Unité de bobine de self selon l'une quelconque des revendications 1 à 6, **caractérisée en ce que** les éléments polarisés forment sensiblement des surfaces de paroi planes (25h, i) d'un anneau de culasse (19h) en forme de pyramide tronquée entourant un espace de réception (27h), les plaques de paroi (25h, i) pouvant être amenées avec leurs surfaces de paroi internes (29h, i) formant les surfaces terminales des éléments polarisés en contact de circuit au moins selon une forme approximativement linéaire ou en un tel contact de circuit similaire avec les surfaces circonférentielles coniques externes du composant (3h, i).

38. Unité de bobine de self selon la revendication 37,
**caractérisée en ce que** les plaques de paroi (25i) peuvent coulisser tangentiellement ou/et radialement par rapport à l'axe (7i) de manière à s'adapter au diamètre du composant (3i) ou/et peuvent être inclinées par rapport à l'axe (7i) pour s'adapter à l'angle de cône du composant (3i).

39. Unité de bobine de self selon l'une quelconque des revendications 1 à 38,
**caractérisée en ce que** dans la surface terminale (29) pouvant être amenée en contact de circuit ou presque en contact de circuit avec les surfaces circonférentielles externes (31) du composant (3) ou à proximité de cette surface terminale, au moins un des éléments polarisés (25) est agencé avec au moins un capteur de température (119) pouvant être amené au moins en contact de circuit direct avec les surfaces circonférentielles.

40. Unité de bobine de self selon la revendication 39, **caractérisée en ce que** les bobines (23) sont connectées à l'un des générateurs (123) délivrant du courant alternatif,
et **en ce que** le générateur (123) répond au capteur de température (119) et coupe le courant alternatif lorsque le capteur de température (119) enregistre une température supérieure ou égale à une température prédéterminée.

41. Unité de bobine de self selon la revendication 39 ou 40, **caractérisée en ce qu'**un agencement de signalisation (125) répondant au capteur de température (119) est prévu, lequel agencement de signalisation produit un signal optique et/ou acoustique lorsque le capteur de température (119) enregistre une température supérieure ou égale à une température prédéterminée.

42. Unité de bobine de self selon l'une quelconque des revendications 39 à 41, **caractérisée en ce qu'**un agencement d'affichage (127) répondant au capteur de température (119) est prévu, lequel affiche la valeur de la température enregistrée par le capteur de température (119).

43. Unité de bobine de self selon l'une quelconque des revendications 1 à 42,
**caractérisée en ce que** le composant est formé en tant qu'élément de manchon (3) d'un porte-outil (5) recevant avec un ajustage serré l'arbre d'un outil rotatif (11) dans l'ouverture de réception (9) centrée par rapport à l'axe de rotation (7),
**en ce que** les éléments polarisés (25) peuvent coulisser au niveau d'un boîtier (13) en forme d'anneau entourant l'espace de réception (27) et
**en ce que** sur le boîtier (13), une entretoise (57) ajustable peut se déplacer dans une direction axiale ou/et radiale.

44. Unité de bobine de self selon la revendication 43, **caractérisée en ce que** les éléments polarisés (25) et l'entretoise (57) sont couplés de manière forcée l'un avec l'autre pour un déplacement commun.

45. Unité de bobine de self selon l'une quelconque des revendications 1 à 44,
**caractérisée en ce que** les éléments polarisés (25) peuvent coulisser sur un boîtier (13) en forme d'anneau entourant la zone de réception (27) ou/et sur un élément de guide pouvant se déplacer dans une direction axiale ou/et radiale, en particulier une entretoise ajustable (57), laquelle est déterminée, lors du fonctionnement, pour une installation sur le composant (3) à chauffer, **en ce qu'**un capteur de trajet (129) enregistrant la position de l'élément polarisé (25) respectivement de l'élément de guide respectivement de l'élément de construction par rapport au boîtier (13) est associé à au moins un des éléments polarisés ou/et l'élément de guide ou/et un élément de construction couplé de manière forcée avec un de ces composants
et **en ce que** les bobines (23) sont connectées à un générateur (123) répondant au capteur de trajet (129) délivrant un courant alternatif, dont la puissance ou/et l'ampérage du courant alternatif délivré ou/et la durée de la fourniture de courant peut être régulée en fonction de la position enregistrée.

46. Unité de bobine de self selon l'une quelconque des revendications 1 à 45,
**caractérisée en ce que** toutes les bobines (23) sont connectées ensemble en parallèle.

47. Unité de bobine de self selon l'une quelconque des revendications 1 à 46, **caractérisée en ce que** toutes les bobines (23), en ce qui concerne la direction radiale, sont enroulées dans le même sens et ont le même nombre de spires.

48. Unité de bobine de self selon l'une quelconque des revendications 1 à 47,
**caractérisée en ce qu'**au moins quatre éléments polarisés (25) répartis dans la direction circonférentielle sont prévus, auxquels une bobine (23) séparée est à chaque fois affectée.

49. Unité de bobine de self selon l'une quelconque des revendications 1 à 48,
**caractérisée en ce que** dans l'espace de la zone de réception (27), au moins une base (86) orientée vers le composant (3) pour l'alimentation d'un produit de refroidissement, en particulier de l'eau de refroidissement ou de l'air de refroidissement, est prévue.
